# FASCICULE DE BREVET EUROPEEN

(11) **EP 1 715 762 B1**
(45) Date de publication et mention de la délivrance du brevet: **19.12.2007**
(21) Numéro de dépôt: 05717522.6
(22) Date de dépôt: 01.02.2005
(51) Int. Cl.: A23L 1/302, A23C 9/133, F28D 7/00, F04B 7/00

(54) **PROCEDE DE PREPARATION DE PRODUIT LAITIER**
VERFAHREN ZUR HERSTELLUNG EINES MILCHPRODUKTS
METHOD FOR PREPARING A DAIRY PRODUCT

(30) Priorité: 16.02.2004 FR 0401513
(43) Date de publication de la demande: 02.11.2006
(73) Titulaire: Compagnie Gervais Danone, 75009 Paris (FR)
(72) Inventeur: DOAT, Stéphane, F-91620 La Ville du Bois (FR); VELA ROCA, Elena, E-08190 Barcelona (ES); MONTSERRAT CARRERAS, Agusti, E-08450 Llinars Del Valles - Barcelona (ES); WEILL, Ricardo, AR-1706 Villa Sarmiento, Bueonos Aires (AR); GASPARD, Claude, Emmanuelle, F-75015 Paris (FR); ROBINE, Bernard, F-92350 Le Plessis Robinson (FR)
(74) Mandataire: Grosset-Fournier, Chantal Catherine
(86) Numéro de dépôt international: PCT/FR2005/000203
(87) Numéro de publication internationale: WO 2005/087021

(56) Documents cités:
- EP-A- 1 212 945
- WO-A-00/33669
- WO-A-03/055324
- WO-A-03/077679
- WO-A-20/04014141
- US-B1- 6 391 370
- US-B1- 6 627 245
- MENSINK R P ET AL: "EFFECTS OF PLANT STANOL ESTERS SUPPLIED IN LOW-FAT YOGHURT ON SERUM LIPIDS AND LIPOPROTEINS, NON-CHOLESTEROL STEROLS AND FAT SOLUBLE ANTIOXIDANT CONCENTRATIONS" ATHEROSCLEROSIS, AMSTERDAM, NL, vol. 160, no. 1, janvier 2002 (2002-01), pages 205-213, XP001104063 ISSN: 0021-9150
- PATENT ABSTRACTS OF JAPAN vol. 2003, no. 12, 5 décembre 2003 (2003-12-05) & JP 2004 018678 A (IKEDA SHOKKEN KK), 22 janvier 2004 (2004-01-22)
- PATENT ABSTRACTS OF JAPAN vol. 2002, no. 08, 5 août 2002 (2002-08-05) & JP 2002 112725 A (SOOEE MACHINE:KK), 16 avril 2002 (2002-04-16)
- PATENT ABSTRACTS OF JAPAN vol. 017, no. 200 (C-1050), 20 avril 1993 (1993-04-20) & JP 04 346765 A (FUJITA SHIYOKUHIN:KK), 2 décembre 1992 (1992-12-02)
- PATENT ABSTRACTS OF JAPAN vol. 2000, no. 13, 5 février 2001 (2001-02-05) & JP 2000 303450 A (TAISEI CORP), 31 octobre 2000 (2000-10-31)

## Description

La présente invention a pour objet un procédé de préparation d'un produit laitier à teneur élevée en eau contenant des composés à point de fusion élevé et/ou hydrophobes dotés d'une activité biologique d'intérêt.

Parmi ces composés à point de fusion élevé et/ou hydrophobes, les phytostérols sont des composés qui bénéficient d'un dossier scientifique solide permettant de confirmer leur effet anticholestérolémiant. Deux types de phytostérols sont disponibles sur le marché : les stérols et les stanols (stérols hydrogénés). Ces stérols ou stanols sont souvent proposés par différents fournisseurs sous forme estérifiée.

Ces composés sont incorporés dans des aliments gras tels que des margarines. Il existe de réelles difficultés pour les incorporer dans des produits très aqueux tels que les yaourts, les produits laitiers en général.

Le document EP 1 059 851 décrit un moyen d'incorporer des phytostérols sous forme de poudre préférentiellement. Or cette forme de poudre est de moins en moins proposée par des fournisseurs de stérols au profit de formes huileuses. Il est donc primordial de trouver un autre moyen efficace d'incorporation des phytostérols, sous cette forme huileuse dans des produits à teneur élevée en eau.

La demande internationale WO 01/32029 décrit une composition comprenant une huile ou une graisse végétale et un ou plusieurs phytostérols ou phytostanols dans lequel les phytostérols et/ou les phytostanols, qui ne sont pas sous forme d'esters, sont essentiellement complètement dissous. Le procédé utilisé consiste à chauffer les phytostérols et/ou phytostanols pour former une masse fondue, qui est ensuite ajoutée à une huile chauffée ou à une graisse chauffée, et la composition ainsi formée est ensuite refroidie. S'agissant des applications possibles citées dans cette demande, il est décrit la préparation d'une boisson laitière, comprenant une étape de mélange de gomme xanthane, de la poudre de lait écrémé et du lait écrémé, laissés à température ambiante pour réhydrater la poudre de lait. Puis le mélange est soumis à une agitation pour obtenir une dispersion uniforme. Une huile contenant des phytostérols est chauffée à 80°C et ajoutée au mélange pendant l'agitation, puis on soumet l'ensemble à une homogénéisation et à un traitement UHT. L'addition de l'huile contenant des phytostérols, chauffée à 80°C au mélange qui semble être à température ambiante entraîne la recristallisation du stérol ce qui empêche la préparation d'une boisson laitière ou d'un yaourt.

Le brevet US 6,190,270 décrit un procédé de préparation d'un ingrédient alimentaire comprenant les étapes suivantes : chauffage d'un ou plusieurs stérols à leur point de fusion, combinaison du produit obtenu avec un ou plusieurs émulsifiants pour produire un mélange homogène et refroidissement du mélange sous agitation, pour produire un ingrédient alimentaire. Il est toujours prévu dans ce document l'utilisation d'un émulsifiant.

Le document EP 1 212 945 concerne une boisson laitière comprenant un ester de stanol à raison de 0,2 à 2% en poids et pouvant contenir, entre autres ingrédients, un épaississant. Toutes les applications citées mentionnent l'utilisation d'agents stabilisants, essentiellement des épaississants et parfois des émulsifiants.

La présente invention découle du fait qu'il a été constaté de manière inattendue que l'utilisation d'un ester de stérol et/ou de stanol pour la préparation d'un produit laitier fermenté était possible sans utiliser d'émulsifiant.

La présente invention a donc pour but de fournir un procédé de préparation d'un produit laitier fermenté impliquant entre le préchauffage de la composition laitière et la phase d'homogénéisation, l'introduction d'ester de stérol et/ou de stanol fondu.

La présente invention a donc pour but de fournir un procédé de préparation comprenant l'injection en ligne d'un ester de stérol et/ou de stanol, sans épaississant et sans émulsifiant, dans une composition laitière sans émulsifiant, portée à une température dépendante de la température de fusion de l'ester de stérol et/ou de stanol.

La présente invention concerne un procédé de préparation dans une ligne de fabrication d'un produit laitier comprenant une étape d'introduction par injection en continu, à travers la ligne de fabrication, d'au moins un ester de stérol et/ou de stanol à une température donnée T₁, supérieure ou égale à la température de fusion dudit ester, et notamment variant de 35 à 80°C, dans une composition laitière présentant une température donnée T₂ au moins égale à T₁, correspondant à une composition initiale à base de lait, contenant des protéines laitières et dépourvue d'émulsifiant, pour obtenir un mélange,
ladite étape d'introduction de l'ester de stérol et/ou de stanol ayant lieu avant une étape d'homogénéisation dudit mélange.

L'expression "ligne de fabrication" désigne l'ensemble des conduits et les éléments du procédé tels que des pompes, des échangeurs thermiques, un homogénéisateur et un chambreur dans lesquels la composition laitière circule.

L'expression "injection en continu" désigne un procédé consistant en un mélange de deux fluides (dans le cas présent d'une composition laitière et d'ester de stérol et/ou de stanol fondu) convoyés initialement dans des lignes distinctes, puis mélangés par jonction de ces lignes en un point particulier du procédé (avant homogénéisation), et correspond à une injection en ligne.

L'expression "composition initiale à base de lait" désigne la composition laitière de départ avant tout traitement, tandis que l'expression "composition laitière" correspond à la composition initiale à base de lait qui a subi un traitement, notamment thermique.

L'expression "à travers la ligne de fabrication" désigne le fait d'introduire l'ester de stérol et/ou de stanol fondu via une ligne de fabrication dans la ligne de fabrication de la composition laitière.

La température T₂ de la composition laitière dans laquelle on injecte l'ester de stérol et/ou de stanol est égale ou supérieure à la température T₁ à laquelle se trouve ledit ester, cette température T₁ étant elle-même égale ou supérieure à la température de fusion de l'ester.

Selon un mode de réalisation avantageux de l'invention, la température T₂ est d'environ 5°C supérieure à la température de fusion de l'ester, et la température T₁ est d'environ 2°C supérieure à la température de fusion de l'ester.

Selon un autre mode de réalisation, la température T₁ est d'environ 5°C à 10°C supérieure à la température de fusion de l'ester.

Un procédé avantageux selon la présente invention comprend une étape d'introduction en continu d'un ester de stérol et/ou de stanol à une température T₁ variant de 35 à 80°C, notamment de 40 à 70°C, et plus particulièrement de 45 à 60°C, dans la composition laitière telle que définie ci-dessus.

La présente invention concerne un procédé tel que défini ci-dessus, comprenant une étape d'introduction en continu d'un ester de stanol à une température T₁ variant de 60 à 80°C, et de préférence de 65 à 70°C, dans la composition laitière telle que définie ci-dessus.

La présente invention concerne également un procédé de préparation d'un produit laitier tel que défini ci-dessus, caractérisé en ce qu'il comprend les étapes suivantes :
- une étape de préchauffage de la composition initiale telle que définie ci-dessus, ladite étape de préchauffage étant effectuée à une température T₂ d'environ 50°C à environ 70°C, notamment d'environ 55°C à environ 65°C, et étant de préférence effectuée à environ 65°C, afin d'obtenir une composition laitière à la température de préchauffage,
- une étape d'introduction par injection en continu de l'ester de stérol et/ou de stanol à une température T₁ telle que définie précédemment, dans la susdite composition laitière à la température de préchauffage, afin d'obtenir un mélange, et
- une étape d'homogénéisation dudit mélange.

Ce mode de réalisation préféré correspond à un procédé d'homogénéisation en phase montante.

La présente invention concerne également un procédé de préparation d'un produit laitier tel que défini ci-dessus, caractérisé en ce qu'il comprend les étapes suivantes :
- une étape de chauffage d'une composition laitière correspondant à une composition initiale à base de lait, contenant des protéines laitières et dépourvue d'émulsifiant, ladite étape de chauffage étant effectuée à une température T₂ d'environ 85°C à environ 100°C, notamment d'environ 87°C à environ 97°C, avantageusement d'environ 87°C à environ 95°C, et étant de préférence effectuée à environ 95°C, afin d'obtenir une composition laitière à la température de chauffage,
- une étape d'introduction de l'ester de stérol et/ou de stanol à une température T₁ définie précédemment, dans la susdite composition laitière à la température de chauffage, afin d'obtenir un mélange, et
- une étape d'homogénéisation dudit mélange.

Ce mode de réalisation préféré correspond à un procédé d'homogénéisation en phase intermédiaire.

La présente invention concerne également un procédé de préparation d'un produit laitier tel que défini ci-dessus, caractérisé en ce qu'il comprend les étapes suivantes :
- une étape de chauffage d'une composition laitière correspondant à une composition initiale à base de lait, contenant des protéines laitières et dépourvue d'émulsifiant, ladite étape de chauffage étant effectuée à une température T₂ d'environ 85°C à environ 100°C, notamment d'environ 87°C à environ 97°C, avantageusement d'environ 87°C à environ 95°C, et étant de préférence effectuée à environ 95°C, afin d'obtenir une composition laitière à la température de chauffage,
- une étape d'introduction de l'ester de stérol et/ou de stanol à une température T₁ définie précédemment, dans la susdite composition laitière à la température de chauffage, afin d'obtenir un mélange, et
- une étape de chambrage dudit mélange, ladite étape de chambrage étant effectuée pendant une durée suffisante pour maintenir la composition laitière issue de l'étape de chauffage pendant une durée suffisante à la température de chauffage, afin de détruire la flore microbienne végétative, afin d'obtenir un mélange chambré, et
- une étape d'homogénéisation du susdit mélange chambré.

Ce mode de réalisation préféré correspond à un procédé d'homogénéisation en phase descendante.

L'étape de chambrage susmentionnée correspond à une étape permettant de détruire la flore microbienne végétative, dont les formes pathogènes, pendant notamment environ 4 minutes à environ 10 minutes, notamment environ 5 à environ 8 minutes, et étant de préférence effectuée pendant environ 6 minutes.

La présente invention concerne également un procédé de préparation d'un produit laitier tel que défini ci-dessus, caractérisé en ce qu'il comprend les étapes suivantes :
- une étape de préchauffage d'une composition initiale à base de lait, contenant des protéines laitières et dépourvue d'émulsifiant, à une température de préchauffage d'environ 50°C à environ 70°C, notamment d'environ 55°C à environ 65°C, et étant de préférence effectuée à environ 65°C, pour obtenir une composition laitière à la température de préchauffage,
- une étape d'introduction dans la susdite composition laitière à la température de préchauffage, d'au moins un ester de stérol et/ou de stanol à la température T₁ définie précédemment, afin d'obtenir un mélange,
- une étape d'homogénéisation du susdit mélange à une pression d'environ 100 bars à environ 280 bars, notamment d'environ 100 bars à environ 250 bars, avantageusement d'environ 100 bars à environ 200 bars, et de préférence d'environ 200 bars, pour obtenir un mélange homogénéisé,
- une étape de chauffage du susdit mélange homogénéisé, ledit chauffage étant effectué à une température de chauffage d'environ 85°C à environ 100°C, notamment d'environ 87°C à environ 97°C, avantageusement d'environ 87°C à environ 95°C, et étant de préférence effectué à environ 95°C, pour obtenir un mélange homogénéisé chauffé, et
- une étape de chambrage du susdit mélange homogénéisé chauffé, ladite étape de chambrage étant effectuée à une température sensiblement égale à celle de l'étape précédente, à savoir l'étape de chauffage, pour obtenir un mélange homogénéisé chauffé et chambré.

Selon un mode de réalisation avantageux de l'invention, l'étape de chambrage susmentionnée est effectuée pendant notamment environ 4 minutes à environ 10 minutes, notamment environ 5 à environ 8 minutes, et de préférence pendant environ 6 minutes.

La présente invention concerne également un procédé de préparation d'un produit laitier tel que défini ci-dessus, caractérisé en ce qu'il comprend les étapes suivantes :
- une étape de préchauffage d'une composition initiale à base de lait, contenant des protéines laitières et dépourvue d'émulsifiant, à une température de préchauffage d'environ 50°C à environ 70°C, notamment d'environ 55°C à environ 65°C, et étant de préférence effectuée à environ 65°C, pour obtenir une composition laitière à la température de préchauffage,
- une étape de chauffage de la susdite composition laitière, ledit chauffage étant effectué à une température T₂ de chauffage d'environ 85°C à environ 100°C, notamment d'environ 87°C à environ 97°C, avantageusement d'environ 87°C à environ 95°C, et étant de préférence effectuée à environ 95°C, pour obtenir une composition laitière à la température de chauffage,
- une étape d'introduction dans la susdite composition laitière à la température de préchauffage d'au moins un ester de stérol et/ou de stanol à une température T₁ définie ci-dessus, afin d'obtenir un mélange,
- une étape d'homogénéisation du susdit mélange à une pression d'environ 100 bars à environ 280 bars, notamment d'environ 100 bars à environ 250 bars, avantageusement d'environ 100 bars à environ 200 bars, et de préférence d'environ 200 bars, pour obtenir un mélange homogénéisé, et
- une étape de chambrage du susdit mélange homogénéisé, pour obtenir un mélange homogénéisé chambré.

Selon un mode de réalisation avantageux de l'invention, l'étape de chambrage susmentionnée est effectuée pendant notamment environ 4 minutes à environ 10 minutes, notamment environ 5 à environ 8 minutes, et de préférence pendant environ 6 minutes.

La présente invention concerne également un procédé préparation d'un produit laitier de l'invention, caractérisé en ce qu'il comprend les étapes suivantes :
- une étape de préchauffage d'une composition initiale à base de lait, contenant des protéines laitières et dépourvue d'émulsifiant, à une température de préchauffage d'environ 50°C à environ 70°C, notamment d'environ 55°C à environ 65°C, et étant de préférence effectuée à environ 65°C, pour obtenir une composition laitière à la température de préchauffage,
- une étape de chauffage de la susdite composition laitière, ledit chauffage étant effectué à une température T₂ de chauffage d'environ 85°C à environ 100°C, notamment d'environ 87°C à environ 97°C, avantageusement d'environ 87°C à environ 95°C, et étant de préférence effectuée à environ 95°C, pour obtenir une composition laitière à la température de chauffage, et
- une étape d'introduction dans la susdite composition laitière à la température de préchauffage d'au moins un ester de stérol et/ou de stanol à une température T₁ définie précédemment, afin d'obtenir un mélange,
- une étape de chambrage du susdit mélange, pour obtenir un mélange chambré, et
- une étape d'homogénéisation du susdit mélange chambré à une pression d'environ 100 bars à environ 280 bars, notamment d'environ 100 bars à environ 250 bars, avantageusement d'environ 100 bars à environ 200 bars, et de préférence d'environ 200 bars, pour obtenir un mélange chambré homogénéisé.

Selon un mode de réalisation avantageux de l'invention, l'étape de chambrage susmentionnée est effectuée pendant notamment environ 4 minutes à environ 10 minutes, notamment environ 5 à environ 8 minutes, et de préférence pendant environ 6 minutes.

La présente invention concerne également un procédé de préparation d'un produit laitier tel que défini précédemment, caractérisé en ce qu'il comprend les étapes suivantes :
- une étape de préchauffage d'une composition initiale à base de lait, contenant des protéines laitières et dépourvue d'émulsifiant, à une température de préchauffage d'environ 50°C à environ 70°C, notamment d'environ 55°C à environ 65°C, et étant de préférence effectuée à environ 65°C, pour obtenir une composition laitière à la température de préchauffage,
- une étape de chauffage de la susdite composition laitière, ledit chauffage étant effectué à une température T₂ de chauffage d'environ 85°C à environ 100°C, notamment d'environ 87°C à environ 97°C, avantageusement d'environ 87°C à environ 95°C, et étant de préférence effectuée à environ 95°C, pour obtenir une composition laitière à la température de chauffage,
- une étape de chambrage de la susdite composition laitière à la température de chauffage, pour obtenir une composition laitière chambrée, ladite étape de chambrage étant effectuée à une température sensiblement égale à celle de l'étape précédente, à savoir à la température de chauffage,
- une étape d'introduction dans la susdite composition laitière chambrée d'au moins un ester de stérol et/ou de stanol à une température T₁ définie précédemment, afin d'obtenir un mélange,
- une étape d'homogénéisation du susdit mélange à une pression d'environ 100 bars à environ 280 bars, notamment d'environ 100 bars à environ 250 bars, avantageusement d'environ 100 bars à environ 200 bars, et de préférence d'environ 200 bars, pour obtenir un mélange homogénéisé.

Selon un mode de réalisation avantageux de l'invention, l'étape de chambrage susmentionnée est effectuée pendant notamment environ 4 minutes à environ 10 minutes, notamment environ 5 à environ 8 minutes, et de préférence pendant environ 6 minutes.

Selon un mode de réalisation avantageux, un procédé préféré selon la présente invention est caractérisé en ce qu'il comprend les étapes suivantes :
- une étape de préchauffage d'une composition initiale à base de lait, contenant des protéines laitières et dépourvue d'émulsifiant, à une température de préchauffage d'environ 50°C à environ 70°C, notamment d'environ 55°C à environ 65°C, et étant de préférence effectuée à environ 65°C, pour obtenir une composition laitière à la température de préchauffage,
- une étape d'introduction dans la susdite composition laitière à la température de préchauffage, d'au moins un ester de stérol et/ou de stanol à une température T₁ définie précédemment, afin d'obtenir un mélange,
- une étape de chauffage du susdit mélange, ledit chauffage étant effectué à une température T₂ de chauffage d'environ 85°C à environ 100°C, notamment d'environ 87°C à environ 97°C, avantageusement d'environ 87°C à environ 95°C, et étant de préférence effectuée à environ 95°C, pour obtenir un mélange à la température de chauffage,
- une étape de chambrage du susdit mélange à la température de chauffage, pour obtenir un mélange chambré, ladite étape de chambrage étant effectuée à une température sensiblement égale à celle de l'étape précédente, à savoir à la température de chauffage, et
- une étape d'homogénéisation du susdit mélange chambré à une pression d'environ 100 bars à environ 280 bars, notamment d'environ 100 bars à environ 250 bars, avantageusement d'environ 100 bars à environ 200 bars, et de préférence d'environ 200 bars, pour obtenir un mélange homogénéisé.

Selon un mode de réalisation avantageux de l'invention, l'étape de chambrage susmentionnée est effectuée pendant notamment environ 4 minutes à environ 10 minutes, notamment environ 5 à environ 8 minutes, et de préférence pendant environ 6 minutes.

Un procédé avantageux selon la présente invention est un procédé tel que défini ci-dessus, dans lequel l'étape de chambrage est suivie des étapes suivantes :
- une étape de fermentation du mélange homogénéisé chauffé et chambré tel que défini ci-dessus, effectuée à une température d'environ 30°C à environ 47°C, notamment d'environ 35°C à environ 45°C, et de préférence d'environ 38°C à environ 42°C, afin d'obtenir un mélange fermenté, et
- une éventuelle étape de lissage du susdit mélange fermenté, afin d'obtenir une masse blanche finale, comprenant une phase grasse, correspondant à l'ester de stérol et/ou de stanol, incluse par l'étape d'homogénéisation dans le réseau protéique formée par les protéines laitières et le lait de la susdite composition initiale telle que définie précédemment, ladite masse blanche finale étant caractérisée en ce qu'elle présente une homogénéité entre la phase grasse et le réseau protéique, et ne présente aucun déphasage entre la phase aqueuse et le réseau protéique.

Selon un mode de réalisation avantageux de l'invention, la durée de l'étape de fermentation est de quelques heures à quelques jours, et notamment d'environ 3 heures à environ 24 heures, et est de préférence d'environ 3 à environ 12 heures, notamment d'environ 5 à environ 10 heures, et de préférence d'environ 6 à 9 heures.

Dans le cadre de l'étape de fermentation, la consommation du lactose par les bactéries lactiques provoque la formation d'acide lactique et ainsi abaisse le pH, ce qui conduit à la formation du réseau protéique.

Dans le cadre de l'étape de lissage, pour l'obtention d'une texture dite brassée, on cisaille la masse blanche et on stoppe la fermentation par un refroidissement. On observe alors une absence de sérum à l'examen visuel d'un yaourt ferme, ainsi qu'une homogénéité entre la phase grasse et le réseau protéique, selon les deux paramètres suivants :
- la taille des globules gras comprise entre 0,2 et 2 µm, notamment entre 0,2 et 1 µm, et
- les propriétés organoleptiques (pas de goût d'huile et pas d'aspect sableux lié aux cristaux de matière grasse).

Un procédé avantageux selon la présente invention est un procédé tel que défini ci-dessus, dans lequel l'étape de lissage est suivie d'une étape correspondant à l'ajout d'une préparation de fruits, dépourvue de stérol et/ou de stanol sous quelque forme que ce soit.

Un procédé avantageux selon la présente invention est un procédé tel que défini ci-dessus, dans lequel l'étape de lissage est suivie d'une étape correspondant à l'ajout d'une composition à base de céréales dépourvue de stérol et/ou de stanol sous quelque forme que ce soit.

Un procédé avantageux selon la présente invention est un procédé tel que défini ci-dessus, caractérisé en ce que la préparation de fruits comprend un épaississant, notamment choisi parmi : gomme xanthane, pectine, amidon, notamment gélatinisé, gomme gélane, cellulose et ses dérivés, gomme de guar et de caroube, et inuline, la concentration de ces épaississants étant d'environ 0,4% à environ 3% par rapport à la préparation de fruits.

La présente invention concerne également un procédé de préparation d'un produit laitier tel que défini ci-dessus, caractérisé en ce qu'il comprend les étapes suivantes :
- une étape de préchauffage d'une composition initiale à base de lait, contenant des protéines laitières et dépourvue d'émulsifiant, à une température T₂ de préchauffage d'environ 50°C à environ 70°C, notamment d'environ 55°C à environ 65°C, et étant de préférence effectuée à environ 65°C, pour obtenir une composition laitière à la température de préchauffage,
- une étape d'introduction dans la susdite composition laitière d'au moins un ester de stérol à une température T₁ définie précédemment, afin d'obtenir un mélange,
- une étape d'homogénéisation du susdit mélange à une pression d'environ 100 bars à environ 280 bars, notamment d'environ 100 bars à environ 250 bars, avantageusement d'environ 100 bars à environ 200 bars, et de préférence d'environ 200 bars, pour obtenir un mélange homogénéisé,
- une étape de chauffage du susdit mélange homogénéisé, ledit chauffage étant effectué à une température de chauffage d'environ 85°C à environ 100°C, notamment d'environ 87°C à environ 97°C, avantageusement d'environ 87°C à environ 95°C, et étant de préférence effectué à environ 95°C, pour obtenir un mélange homogénéisé chauffé, et
- une étape de chambrage du susdit mélange homogénéisé chauffé, pour obtenir un mélange homogénéisé chauffé et chambré,
- une étape de fermentation du susdit mélange homogénéisé chauffé et chambré, effectuée à une température d'environ 30°C à environ 47°C, notamment d'environ 35°C à environ 45°C, et de préférence d'environ 38°C à environ 42°C, afin d'obtenir un mélange fermenté, et
- une éventuelle étape de lissage du susdit mélange fermenté, afin d'obtenir une masse blanche finale, comprenant une phase grasse, correspondant à l'ester de stérol et/ou de stanol, incluse par l'étape d'homogénéisation dans le réseau protéique formée par les protéines laitières et le lait de la susdite composition initiale telle que définie ci-dessus, ladite masse blanche finale étant caractérisée en ce qu'elle présente une homogénéité entre la phase grasse et le réseau protéique, et né présente aucun déphasage entre la phase aqueuse et le réseau protéique.

Selon un mode de réalisation avantageux de l'invention, ladite étape de chambrage étant effectuée pendant une durée d'environ 4 minutes à environ 10 minutes, notamment d'environ 5 à environ 8 minutes, et de préférence pendant environ 6 minutes.

Ce procédé permet d'obtenir un produit laitier de type yaourt nature, ferme ou brassé. En l'absence d'une étape de lissage, on obtient un yaourt ferme, et en présence d'une étape de lissage, on obtient un yaourt brassé.

Un procédé avantageux selon la présente invention est un procédé tel que défini ci-dessus, caractérisé en ce que la composition initiale est dépourvue d'épaississant.

Ce mode de réalisation avantageux de la présente invention permet d'obtenir un produit qui présente une meilleure homogénéité entre le réseau protéique et la phase grasse, dans la mesure où les épaississants mis dans une composition initiale contribuent à diminuer l'efficacité du réseau protéique.

La présente invention concerne un procédé de préparation d'un produit laitier tel que défini ci-dessus, caractérisé en ce qu'il comprend les étapes suivantes :
- une étape de préchauffage d'une composition initiale à base de lait, contenant des protéines laitières et dépourvue d'émulsifiant, à une température T₂ de préchauffage d'environ 50°C à environ 70°C, notamment d'environ 55°C à environ 65°C, et étant de préférence effectuée à environ 65°C, pour obtenir une composition laitière à la température de préchauffage,
- une étape d'introduction dans la susdite composition laitière d'au moins un ester de stérol et/ou de stanol à une température T₁ définie précédemment, afin d'obtenir un mélange,
- une étape d'homogénéisation du susdit mélange à une pression d'environ 100 bars à environ 280 bars, notamment d'environ 100 bars à environ 250 bars, avantageusement d'environ 100 bars à environ 200 bars, et de préférence d'environ 200 bars, pour obtenir un mélange homogénéisé,
- une étape de chauffage du susdit mélange homogénéisé, ledit chauffage étant effectué à une température de chauffage d'environ 85°C à environ 100°C, notamment d'environ 87°C à environ 97°C, avantageusement d'environ 87°C à environ 95°C, et étant de préférence effectuée à environ 95°C, pour obtenir un mélange homogénéisé chauffé, et
- une étape de chambrage du susdit mélange homogénéisé chauffé, pour obtenir un mélange homogénéisé chauffé et chambré,
- une étape de fermentation du susdit mélange homogénéisé chauffé et chambré, effectuée à une température d'environ 30°C à environ 47°C, notamment d'environ 35°C à environ 45°C, et de préférence d'environ 38°C à environ 42°C, afin obtenir un mélange fermenté, et
- une étape de lissage du susdit mélange fermenté, afin d'obtenir une masse blanche finale, comprenant une phase grasse, correspondant à l'ester de stérol et/ou de stanol, incluse par l'étape d'homogénéisation dans le réseau protéique formée par les protéines laitières et le lait de la susdite composition initiale telle que définie ci-dessus, ladite masse blanche finale étant caractérisée en ce qu'elle présente une homogénéité entre la phase grasse et le réseau protéique, et ne présente aucun déphasage entre la phase aqueuse et le réseau protéique,
- une étape d'ajout d'une préparation de fruits dépourvue de stérol et/ou de stanol sous quelque forme que ce soit, et
- une étape de mélange à l'aide d'un mélangeur dynamique ou statique de la susdite masse blanche finale, avant la mise en pot dudit produit laitier.

Selon un mode de réalisation avantageux de l'invention, ladite étape de chambrage étant effectuée pendant une durée d'environ 4 minutes à environ 10 minutes, notamment d'environ 5 à environ 8 minutes, et de préférence pendant environ 6 minutes.

Ce procédé permet d'obtenir un produit laitier de type yaourt brassé aux fruits.

Un procédé avantageux selon la présente invention est un procédé tel que défini ci-dessus, caractérisé en ce que la préparation de fruits contient un épaississant, notamment choisi parmi : alginates, gomme xanthane, pectine, amidon, notamment gélatinisé, gomme gélane, cellulose et ses dérivés, gomme de guar et de caroube, et inuline, la concentration de ces épaississants étant d'environ 0,4% à environ 3% par rapport à la préparation de fruits.

Selon un mode de réalisation avantageux, le procédé selon l'invention est caractérisé en ce que la composition initiale comprend du lait, de la poudre de lait, des protéines laitières et un agent en concentration telle qu'il limite la synérèse, ledit agent étant notamment choisi parmi : les alginates, les maltodextrines, les pectines, les fibres solubles, l'amidon et l'inuline, et étant de préférence l'amidon.

Par "agent limitant la synérèse", on définit un composé présentant un fort caractère hydrophile lui permettant de retenir l'eau (sérum) non retenue par le réseau protéique formé lors de l'acidification.

L'agent utilisé dans le cadre de la présente invention est de nature telle et en concentration telle qu'il n'a pas d'effet viscosant sur le gel lactique (structure formée par les protéines laitières).

La présente invention concerne également un procédé tel que défini ci-dessus, caractérisé en ce que l'ester de stérol et/ou de stanol est choisi dans le groupe comprenant : 22-dihydroerogostérol, 7,24(28)-erogostadiénol, campestérol, néospongostérol, 7-ergosténol, cerebistérol, corbistérol, stigmastérol, focostérol, α-spinastérol, sargastérol, 7-dehydrocryonastérol, poriferastérol, chondrillastérol, β-sitostérol, cryonastérol (γ-sitostérol), 7-stigmasternol, 22-stigmasténol, dihydro-γ-sitostérol, β-sitostanol, 14-dehydroergostérol, 24(28)-dehydroergostérol, ergostérol, brassicastérol, ascostérol, épistérol, fécostérol et 5-dihydroergostérol, et leurs mélanges et est avantageusement le β-sitostérol, le β-sitostanol, le β-sitostanol ester, le campestérol ou le brassicastérol.

La présente invention concerne également un procédé tel que défini ci-dessus, caractérisé en ce que le rapport entre le débit de l'ester de.stérol et/ou de stanol et entre le débit de la composition initiale à base de lait varie d'environ 0,5 à environ 3.

La présente invention concerne également un produit tel qu'obtenu selon le procédé de l'invention tel que défini ci-dessus.

La présente invention concerne également un produit tel qu'obtenu selon le procédé de l'invention, se présentant sous la forme d'un produit laitier de type yaourt nature ferme.

La présente invention concerne également un produit tel qu'obtenu selon le procédé de l'invention, se présentant sous la forme d'un produit laitier de type yaourt brassé nature ou aux fruits ou de type yaourt à boire.

La présente invention concerne également un produit tel que défini ci-dessus, contenant d'environ 0,1 % à environ 3% d'ester de stérol et/ou de stanol, et notamment d'environ 0,5% à environ 2,5% d'ester de stérol et/ou de stanol, avantageusement d'environ 1 % à environ 1,6% d'ester de stérol et/ou de stanol.

Un dispositif pour la mise en oeuvre du procédé tel que défini ci-dessus, d'introduction en continu, à travers une ligne de fabrication, d'au moins un ester de stérol et/ou de stanol à une température donnée T₁, supérieure ou égale à la température de fusion dudit ester, et notamment variant de 35 à 80°C, dans une composition laitière à une température T₂ supérieure ou égale à la température T₁, comprend les éléments suivants :
- des moyens permettant de maintenir l'ester de stérol et/ou de stanol susmentionné à la température T₁, tels qu'un bac calorifugé ou une cuve thermostatée,
- des moyens permettant de faire circuler ledit ester vers des moyens d'alimentation d'une ligne de fabrication, tout en maintenant ledit ester à la température T₁, tels qu'un tube calorifugé, et
- des moyens d'alimentation permettant d'introduire ledit ester à la température T₁, dans la ligne de fabrication, tels qu'une pompe positive.

Un dispositif avantageux de mise en place du procédé de l'invention comporte des moyens de circulation de la composition laitière chauffée à la susdite température T₂, et est tel que la susdite pompe fait circuler l'ester à un débit proportionnel au débit de circulation de la susdite composition laitière chauffée à la température T₂.

La présente invention concerne également un procédé de préparation d'un produit de type dessert. Ledit procédé est effectué à partir d'une composition laitière initiale contenant au moins un épaississant et/ou au moins un gélifiant. Ce procédé correspond à celui de l'invention et comprend plus particulièrement une étape de préchauffage de la composition laitière initiale, une étape d'injection de l'ester de stérol et/ou de stanol fondu, une étape d'homogénéisation, une étape de chauffage à une température d'environ 85°C à environ 130°C, notamment à 120°C.

### DESCRIPTION DES FIGURES

Figure 1

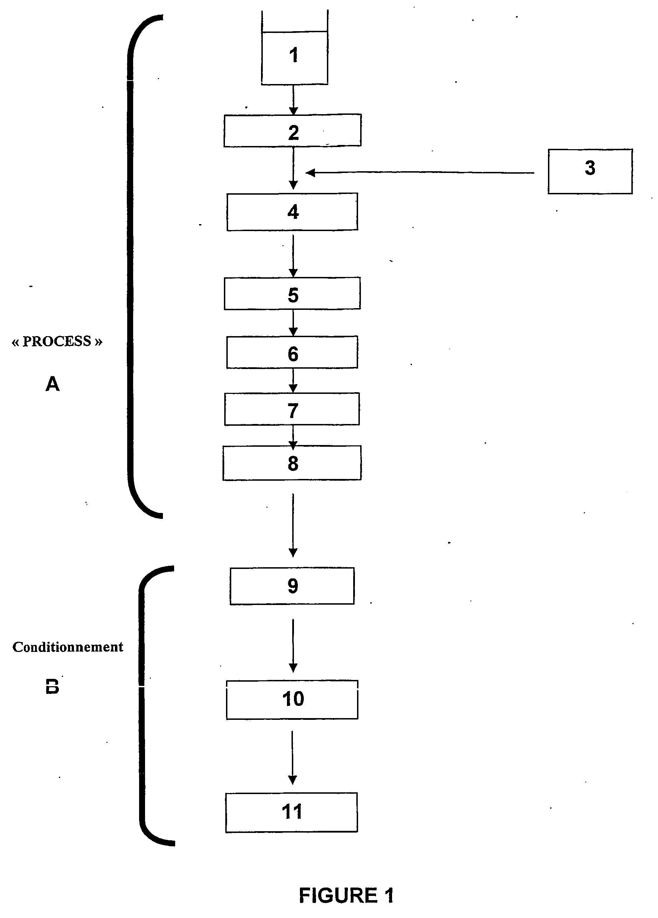

   La figure 1 représente le procédé de préparation d'un yogourt ferme, dans lequel on introduit un ester de stérol et/ou de stanol fondu après l'étape de préchauffage.
   Plus précisément on a représenté par (1) le bac contenant la composition laitière (mix laitier).
   La composition laitière est préchauffée à une température d'environ 50°C à environ 70°C représentée par (2).
   L'introduction dans la composition laitière préchauffée de l'ester de stérol et/ou de stanol en quantité d'environ 0,5% à environ 3%, fondu à une température d'environ 35°C à environ 80°C est représentée par (3).
   On a représenté par (4) l'étape d'homogénéisation du mélange obtenu à l'étape précédente, à une pression d'environ 100 à environ 250 bars.
   On a représenté par (5) l'étape de chauffage à une température d'environ 87°C à environ 97°C, du mélange homogénéisé obtenu à l'étape précédente, et par (6) l'étape de chambrage, pendant environ 4 à 10 minutes, du mélange homogénéisé chauffé.
   Le mélange homogénéisé, chauffé et chambré est ensuite refroidi à une température d'environ 47°C à environ 30°C (7) puis on ajoute les ferments (8).
   On procède ensuite à la mise en pots (9) et à l'étuvage à la température de fermentation (10), puis on arrête la fermentation par mise au froid (11).
   Les étapes indiquées ci-dessus correspondent à la partie « process » représenté par l'accolade (A) sur la figure 1.
   Les étapes (9), (10) et (11) correspondent à la partie « conditionnement » représentée par l'accolade (B) sur la figure 1.
   Le yogourt ferme obtenu contient de 0,5% à 3% d'ester de stérol et/ou de stanol.
Figure 2

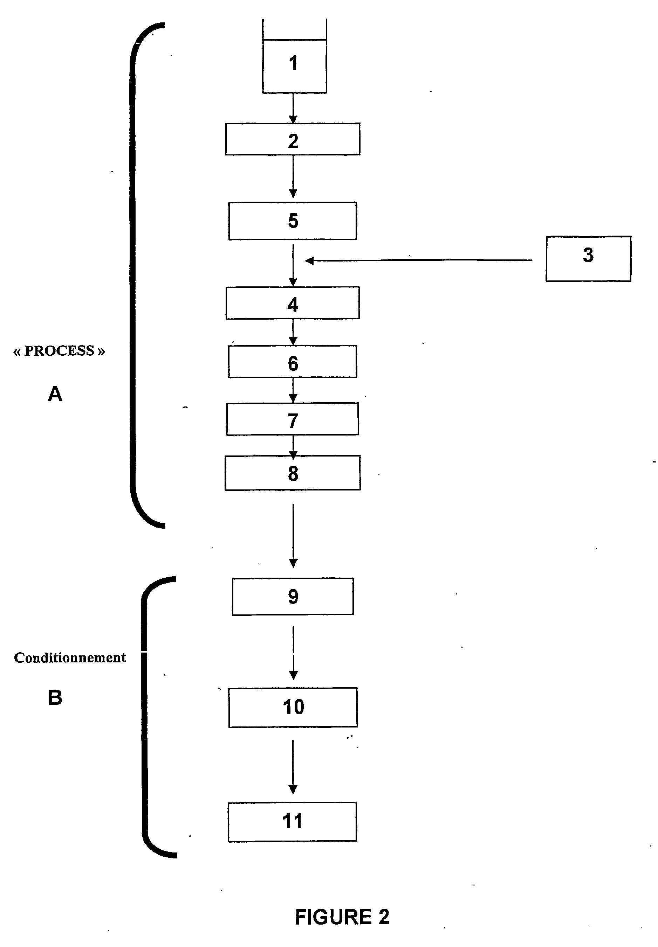

   La figure 2 représente une variante du procédé de préparation d'un yogourt ferme, dans lequel l'introduction (3) du stérol ou du stanol, sous forme d' environ 0,1% à environ 3% d'ester de stérol fondu à une température d'environ 35 à environ 80°C ou d'environ 0,5% à environ 3% d'ester de stanol fondu à une température d'environ 60 à environ 80°C est effectuée après l'étape de chauffage (5) de la composition laitière préchauffée en (2).
   L'introduction (3) de l'ester de stérol ou de stanol est suivie d'une étape d'homogénéisation (4) à une pression d'environ 100 à environ 250 bars du mélange obtenu à l'étape précédente, puis est suivie d'une étape de chambrage.
   Il faut noter que dans cette figure, les chiffres et nombres (1 à 11) et lettres (A et B) utilisés ont les mêmes significations que celles indiquées à la figure 1.
   Le yogourt ferme obtenu contient de 0,5 à 3% d'ester de stérol ou de stanol.
Figure 3

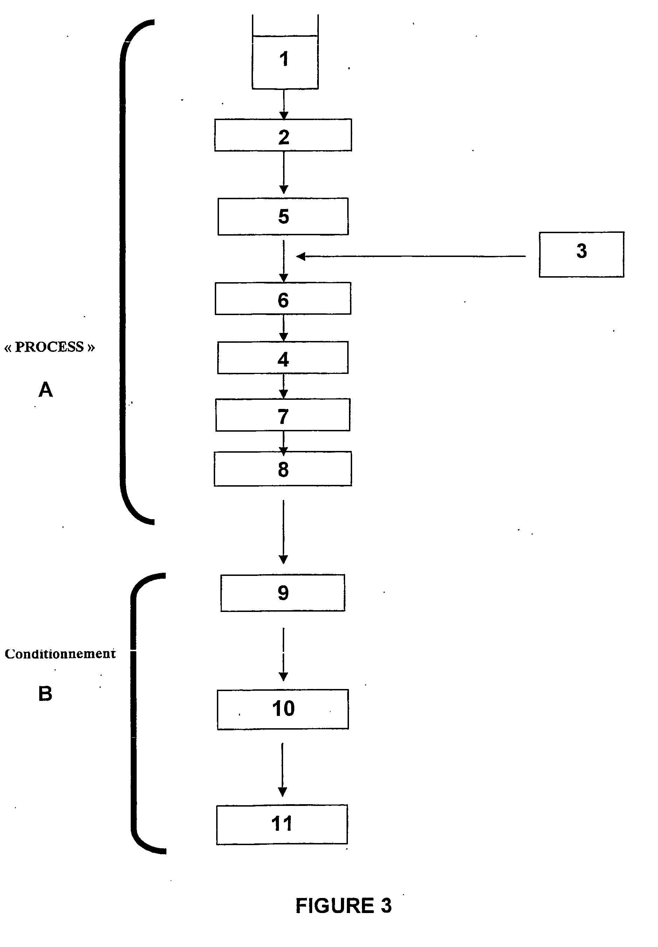

   La figure 3 représente une variante du procédé de préparation de yogourt ferme, dans lequel l'introduction (3) du stérol ou du stanol, sous forme d'ester de stérol ou d'ester de stanol est effectuée dans les quantités et aux températures de fusion indiquées dans la figure 2.
   L'introduction (3) du stérol ou du stanol est suivie d'une étape de chambrage (6) puis d'une étape d'homogénéisation (4) ce qui est la différence avec le procédé de la figure 2, dans lequel l'étape d'introduction du stérol ou du stanol est suivie d'une étape d'homogénéisation (4) puis d'une étape de chambrage (6).
   Dans cette figure, les chiffres et nombres (1 à 11) et lettres (A et B) utilisés ont les mêmes significations que celles indiquées dans la figure 1 et la figure 2.
   Le yogourt ferme obtenu contient de 0,5 à 3% d'ester de stérol ou de stanol.
Figure 4

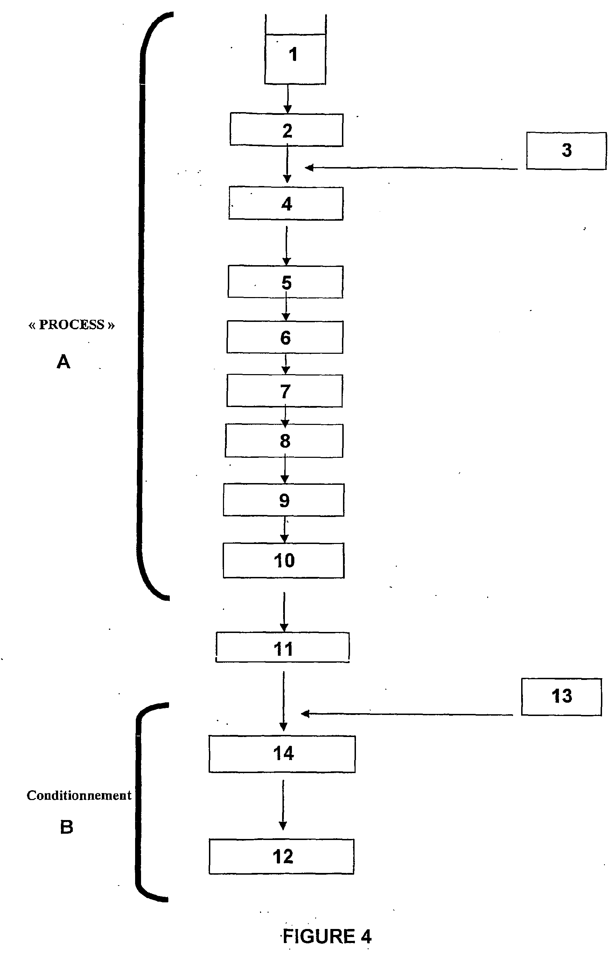

   La figure 4 représente le procédé de préparation d'un yogourt brassé, dans lequel on introduit un ester de stérol fondu après l'étape de préchauffage.
   Plus précisément on a représenté par (1) le bac contenant la composition laitière (mix laitier).
   La composition laitière est préchauffée à une température d'environ 50°C à environ 80°C représentée par (2).
   L'introduction dans la composition laitière préchauffée de l'ester de stérol et ou de stanol en quantité d'environ 0,5 à environ 3%, fondu à une température d'environ 35°C à environ 80°C est représentée par (3).
   On a représenté par (4) l'étape d'homogénéisation du mélange obtenu à l'étape précédente, à une pression d'environ 100 à environ 250 bars.
   On a représenté par (5) l'étape de chauffage à une température d'environ 87°C à environ 97°C, du mélange homogénéisé obtenu à l'étape précédente, et par (6) l'étape de chambrage, pendant environ 4 à 10 minutes, du mélange homogénéisé chauffé.
   Le mélange homogénéisé, chauffé et chambré est ensuite refroidi à une température d'environ 47°C à 30°C (7) puis on ajoute des ferments (8) et on procède à une fermentation à une température d'environ 30°C à environ 47°C (9).
   On procède ensuite à un lissage et à un refroidissement pour arrêter la fermentation (10) pour obtenir une masse blanche finale (11) qui correspond au produit fini brassé nature, lequel est mis en pot à l'étape (12).
   Dans le cas de la préparation d'un yogourt brassé aux fruits, on introduit (13) une préparation de fruits dans la masse blanche finale et on effectue un mélange à l'aide d'un mélangeur dynamique ou statique (14) puis on effectue la mise en pot (12).
   Les étapes (1) à (10) indiquées ci-dessus correspondent à la partie « process » représenté par l'accolade (A) sur la figure 4.
   Les étapes (12), (13) et (14) correspondent à la partie « conditionnement » représentée par l'accolade (B) sur la figure 4.
   Le yogourt ferme obtenu contient de 0,5% à 3% d'ester de stérol et ou de stanol.
Figure 5

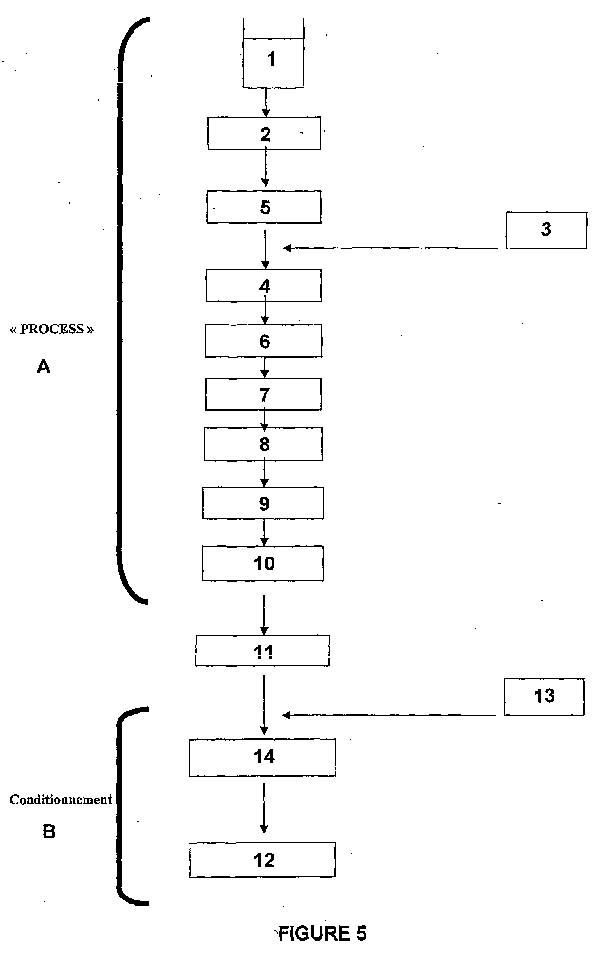

   La figure 5 représente une variante du procédé de préparation d'un yogourt brassé, nature ou aux fruits, dans lequel l'introduction (3) du stérol ou du stanol, sous forme d' environ 0,5% à environ 3% d'ester de stérol fondu à une température d'environ 35 à environ 80°C ou d' environ 0,5% à environ 3% d'ester de stanol fondu à une température d'environ 60 à environ 80°C est effectuée après l'étape de chauffage (5) de la composition laitière préchauffée en (2).
   L'introduction (3) de l'ester de stérol ou de stanol est suivie d'une étape d'homogénéisation (4) à une pression d'environ 100 à environ 250 bars du mélange obtenu à l'étape précédente, puis est suivie d'une étape de chambrage.
   Il faut noter que dans cette figure, les chiffres et nombres (1 à 4) et lettres (A et B) utilisés ont les mêmes significations que celles indiquées à la figure 4.
   Le yogourt ferme obtenu contient de 0,5 à 3% d'ester de stérol ou de stanol.
Figure 6

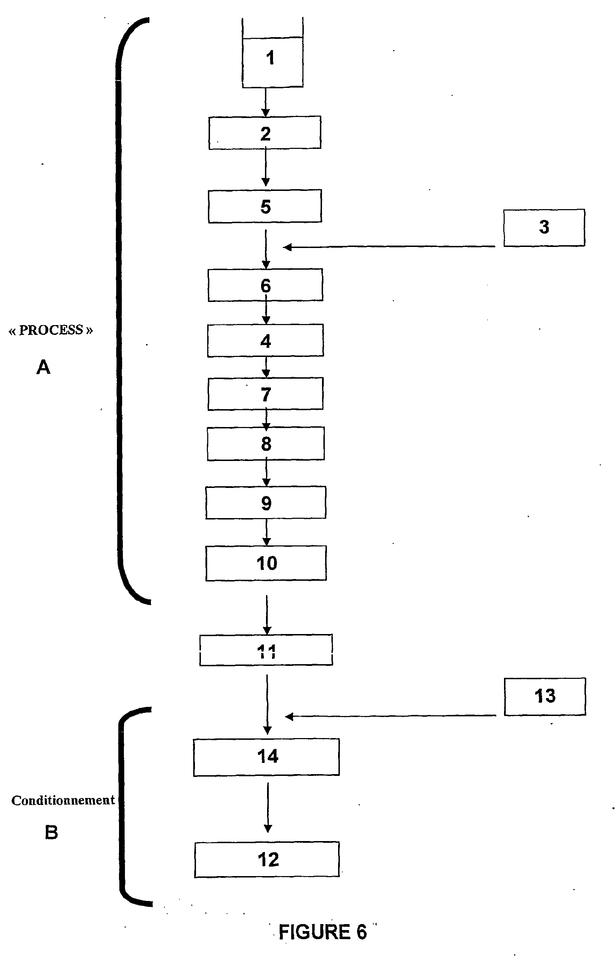

   La figure 6 représente une variante du procédé de préparation de yogourt brassé, nature ou aux fruits, dans lequel l'introduction (3) du stérol ou du stanol, sous forme d'ester de stérol ou d'ester de stanol est effectuée dans les quantités et aux températures de fusion indiquées dans la figure 5.
   L'introduction (3) du stérol ou du stanol est suivie d'une étape de chambrage (6) puis d'une étape d'homogénéisation (4) ce qui est la différence avec le procédé de la figure 5, dans lequel l'étape d'introduction du stérol ou du stanol est suivie d'une étape d'homogénéisation (4) puis d'une étape de chambrage (6).
   Dans cette figure, les chiffres et nombres (1 à 14) et lettres (A et B) utilisés ont les mêmes significations que celles indiquées dans la figure 4 et la figure 5.
   Le yogourt ferme obtenu contient de 0,5% à 3% d'ester de stérol ou de stanol.
Figure 7

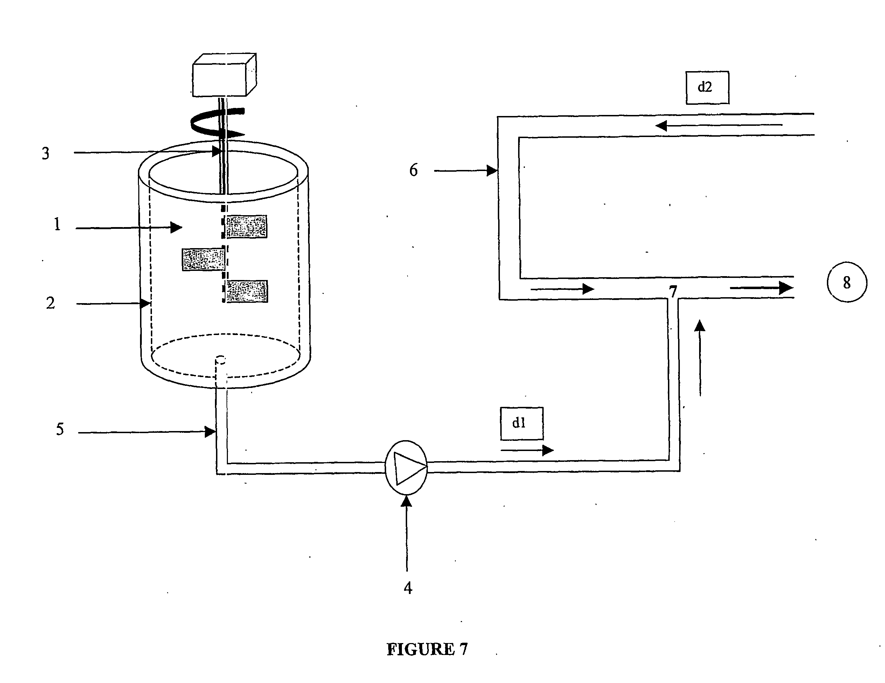

   La figure 7 représente un système d'injection dit "en ligne", comprenant une cuve thermostatée (1) contenant le stanol et/ou le stérol ester fondu, celui ci étant maintenu à une température de 45-70°C (supérieure à la température de fusion) par un système de circulation d'eau chaude dont la température est régulée dans la double enveloppe de la cuve (2), le stanol et/ou stérol ester étant agité dans cette cuve par la rotation de pâles autour d'un axe (3) afin de rendre homogène la température dans cette cuve. Le stanol et/ou stérol ester sous forme liquide est alors pompé par une pompe positive type PCM (4) à travers un conduit (5) calorifugé à un débit d1 déterminé et mesuré en continu, ce débit d1 étant proportionnel au débit d2 du conduit (6) dans lequel circule la composition laitière chauffée à une température supérieure à la température de fusion du stanol et/ou stérol ester. Les conduits (5) et (6) se rejoignent en un point (7). On permet ainsi une dispersion homogène du stanol et/ou stérol ester en s'assurant du débit turbulent de la composition laitière. Ce mélange est alors convoyé vers l'homogénéisateur (8) afin de disperser d'une manière optimale le stanol et/ou stérol ester dans la matrice protéique.

### Exemple 1

Procédé de préparation d'un yogourt nature exempt de matières grasses laitières. La composition laitière initiale comprend :
- du lait à 0,50% de matières grasses, à raison d'environ 70% à environ 97%, notamment à raison de 94,6% ;
- de la poudre de lait écrémé à raison d'environ 0 à 5%, notamment à raison de 3,7% ;
- des protéines laitières à raison d'environ 0,2 à environ 0,8%, notamment à raison de 0,6% ;
- de l'amidon natif en quantité telle qu'il limite la synérèse, et notamment de 0 à environ 0,5%, et notamment 0,3 % ;
- 0 à environ 10% de sucre et
- 0 à environ 25% d'eau.

On place cette composition laitière initiale dans un bac de lancement de la ligne de fabrication, à une température d'environ 10°C, pendant un temps suffisant pour réhydrater la totalité des ingrédients laitiers définis au dessus, puis on préchauffe à une température d'environ 70 à 80°C.

Après le préchauffage de la composition laitière initiale, on introduit des esters de stérols fondus en quantités telles qu'ils soient présents dans le produit fini à une dose de 0,5% à 2,5%, puis on homogénéise à une pression de 100 à 250 bars.

On chauffe le mélange obtenu ci-dessus à une température de 90 à 95°C pour pasteuriser, pendant 3 à 8 minutes, puis on refroidit à la température de 35°C à 45°C, et l'on ensemence le mélange refroidi avec des souches lactiques et on conditionne en pots, pour effectuer la fermentation en pot jusqu'à pH 4,8-4,5, pour obtenir un yogourt nature ferme.

Le yogourt nature ferme ainsi obtenu est mis au froid pour arrêter la fermentation.

Pour obtenir un yogourt nature brassé, on effectue le lissage par brassage de la masse blanche fermentée et on arrête la fermentation de la masse blanche obtenue, par passage de celle-ci sur un échangeur à plaque, refroidissant à 20°C puis on conditionne en pots.

Pour obtenir un yogourt à boire, on arrête la fermentation de la masse blanche finale obtenue par passage sur un échangeur à plaque, refroidissant à 4°C, puis on lisse par passage dans une buse de lissage permettant l'obtention d'une texture de yogourt à boire, puis on effectue le conditionnement.

### Exemple 2

Préparation d'un yogourt brassé aux fruits, contenant 18% de composition de fruits.

On prépare un yogourt brassé aux fruits en procédant comme dans l'exemple 1, dans lequel on introduit, après lissage et refroidissement, une préparation de fruits contenant 48,3% de fruits concentrés, 44,4% de sucre, 0,3% de pectine, 1,4% d'amidon, 0,02 de colorant, 0,5% d'arôme et 5,08% d'eau.

### Exemple 3

Préparation d'un yogourt brassé aux fruits, contenant 22% de composition de fruits.

On prépare un yogourt brassé aux fruits en procédant comme dans l'exemple 1, dans lequel on introduit, après lissage et refroidissement, une préparation de fruits contenant 55,7% de fruits concentrés, 36,3% de sucre, 0,12% de xanthane, 1,5% d'amidon, 0,019% de colorant, 0,5% d'arôme et 5,861% d'eau.

### Exemple 4

Procédé de préparation d'un yogourt aux fruits à boire contenant 5% de composition de fruits.

On prépare un yogourt à boire aux fruits en procédant comme dans l'exemple 1, dans lequel on introduit, après lissage et refroidissement, une préparation de fruits contenant 42% de fruits concentrés, 32,4% de sucre, 1% de colorant, 0,6% d'arôme, 0,7% d'amidon et 23,3% d'eau.

### Exemple comparatif 1

Les résultats de cet exemple montrent bien qu'il est plus difficile d'obtenir un produit satisfaisant lorsque des hydrocolloïdes (tels que des épaississants) sont ajoutés au produit.

Ainsi, le procédé appliqué est le procédé selon la présente invention comprenant les étapes caractéristiques suivantes :
- une étape de préchauffage d'une composition initiale à base de lait, contenant des protéines laitières et dépourvue d'émulsifiant, à une température de préchauffage d'environ 50°C à environ 70°C, pour obtenir une composition laitière à la température de préchauffage,
- une étape d'introduction dans la susdite composition laitière à la température de préchauffage, d'au moins un ester de stérol et/ou de stanol à une température T₁ d'environ 50°C à environ 65°C, afin d'obtenir un mélange,
- une étape de chauffage du susdit mélange, ledit chauffage étant effectué à une température T₂ de chauffage d'environ 95°C, pour obtenir un mélange à la température de chauffage,
- une étape de chambrage du susdit mélange à la température de chauffage, ladite étape de chambrage étant effectuée pendant une durée d'environ 6 minutes, pour obtenir un mélange chambré,
- une étape d'homogénéisation du susdit mélange chambré à une pression d'environ 200 bars, pour obtenir un mélange homogénéisé.

Pour comparaison, le procédé a été appliqué à une composition laitière initiale exempte d'hydrocolloïdes, et à une composition laitière initiale contenant des hydrocolloïdes (xanthane et amidon).

On constate que la composition laitière initiale exempte d'hydrocolloïdes présente un réseau protéique dense avec une assez bonne homogénéité de la phase grasse (phase grasse dispersée bien insérée dans le réseau protéique). Le produit ainsi obtenu est d'une grande fermeté, tandis que la composition laitière initiale contenant des hydrocolloïdes présente une forte hétérogénéité (séparation de phase entre les protéines laitières et la gomme xanthane). L'hétérogénéité du mélange est également visible à l'échelle macroscopique et par la texture granuleuse du produit fini.

Ces résultats permettent de montrer l'intérêt de ne pas utiliser d'hydrocolloïdes dans la composition laitière initiale, car les hydrocolloïdes empêchent la formation convenable du réseau protéique.

### Exemple comparatif 2

Cet exemple a pour but de comparer le procédé de la présente invention comprenant l'injection en ligne des esters de stérol ou de stanol fondus à un procédé comprenant le chauffage d'une composition laitière après l'incorporation d'esters de stérol ou de stanol fondus à une composition laitière initiale non chauffée.

### 1) Composition de la composition laitière initiale:

- Cas du yaourt ferme ou brassé :

| Ingrédients: | |
|---|---|
| Lait à 0,5% : | 95,4% |
| Poudre de lait écrémé : | 3,7% |
| Protéine laitière : | 0,6% |
| Amidon de riz : | 0,3% |

| *Caractéristiques protéiques :* | |
|---|---|
| Protéines : | 5,0% |
| Caséiries : | 3,65% |
| Protéines sériques : | 1,35% |
| Rapport Caséine/protéines sériques : | 2,7 |

- Cas du yaourt à boire :

| Ingrédients: | |
|---|---|
| Lait à 0,5% : | 82,65% |
| Eau : | 10,0% |
| Sucre : | 7,0% |
| Protéine laitière : | 0,35% |

| *Caractéristiques protéiques* : | |
|---|---|
| Protéines : | 3,0% |
| Caséines : | 2,18%- |
| Protéines sériques : | 0,79% |
| Rapport Caséine/protéines sériques : | 2,7 |

### 2) Procédé d'obtention des produits :

### Selon le procédé de comparaison :

Ce procédé correspond au chauffage d'une composition laitière comprenant la composition laitière initiale et les esters de stérol ou de stanol fondus. Ainsi les ingrédients dans le paragraphe 1 sont mélangés pour former une composition laitière initiale, dans laquelle sont incorporés les esters de stérol ou stanol fondus. La composition laitière ainsi obtenue est chauffée à 70°C-80°C sous agitation permettant la réalisation d'une suspension homogène pendant une durée maximale de 2 heures. Ce cas correspond à l'introduction des esters de stérol et/ou de stanol dans le lait au même titre que les autres ingrédients entrant dans la composition de la préparation laitière. Dans ce cas, on retrouve ainsi une mise en oeuvre classique des ingrédients pour la technologie des yaourts.

### Selon le procédé de l'invention :

Ce procédé correspond à l'injection en ligne des esters de stérol ou stanol fondus.

Ainsi les ingrédients mentionnés au paragraphe 1 sont mélangés pendant une durée maximale de 2 heures à une température maximale de 10°C, ce qui permet l'obtention d'une composition laitière initiale dans laquelle les protéines laitières ont été réhydratatées. Ensuite, la composition laitière initiale susmentionnée est préchauffée à une température d'environ 70°C-80°C, afin d'obtenir une composition laitière préchauffée, à laquelle sont injectés en ligne les esters de stérol ou stanol fondus.

La succession des étapes suivantes concernant notamment l'homogénéisation et la fermentation est identique dans les deux cas et correspond au procédé de la présente invention.

### 3) Produits issus de ces essais :

- **P1**: Yoghourt **ferme** issu d'une composition laitière chauffée avec ester
- **P1'**: Yoghourt **ferme** issu de l'injection d'ester
- **P2**: Yoghourt **brassé** issu d'une composition laitière chauffée avec ester
- **P2'**: Yoghourt **brassé** issu de l'injection d'ester
- **P3**: Yoghourt **à boire** issu d'une composition laitière chauffée avec ester
- **P3'**: Yoghourt **à boire** issu de l'injection d'ester

### 4) Mesures effectuées sur ces produits :

| | **Mesures instrumentales** | **Caractérisation de la matière grasse dans le réseau protéique** | | **Mesures chimiques** | **Mesures organoleptiques (notes de 0-5)** | | | | |
|---|---|---|---|---|---|---|---|---|---|
| Produits | Viscosité rhéomat | Rétention eau | Observation microscopique | Indice Péroxyde | Sérum/ décantation | Homogénéité du gel | Epaisseur en bouche | Goût rance | Goût de « cuit » |
| **P1** | | Début de conservation | Début de conservation | Début et fin de conservation | Début et fin de conservation | Début et fin de conservation | | Début et fin de conservation | Début et fin de conservation |
| **P1'** | | Début de conservation | Début de conservation | Début et fin de conservation | Début et fin de conservation | Début et fin de conservation | | Début et fin de conservation | Début et fin de conservation |
| **P2** | Début et fin de conservation | Début de conservation | Début de conservation | Début et fin de conservation | | | Début et fin de conservation | Début et fin de conservation | Début et fin de conservation |
| **P2'** | Début et fin de conservation | Début de conservation | Début de conservation | Début et fin de conservation | | | Début et fin de conservation | Début et fin de conservation | Début et fin de conservation |
| **P3** | Début et fin de conservation | Début de conservation | Début de conservation | Début et fin de conservation | Début et fin de conservation | | Début et fin de conservation | Début et fin de conservation | Début et fin de conservation |
| **P3'** | Début et fin de conservation | Début de conservation | Début de conservation | Début et fin de conservation | Début et fin de conservation | | Début et fin de conservation | Début et fin de conservation | Début et fin de conservation |

Les résultats des mesures montrent :
- que les yaourts obtenus selon le procédé de l'invention ont une viscosité plus importante que ceux obtenus par le procédé de comparaison, ce qui correspond à une plus grande fermeté ;
- que la capacité à retenir l'eau du gel sous contrainte est plus importante dans le cas des yaourts obtenus selon l'invention ;
- que l'indice de peroxyde est significativement élevé dans le cas des yaourts obtenus selon le procédé de comparaison, que dans le cas de l'invention.

Quant aux mesures organoleptiques effectuées sur un échantillon de consommateurs :
- s'agissant du sérum, une note faible a été obtenue correspondant au fait que, lorsqu'on tranche le yaourt, le sérum ne se dégage pas du gel lactique dans les yaourts selon l'invention ;
- s'agissant de l'homogénéité du gel, une note plus forte a été obtenue pour le yaourt de l'invention, correspondant au fait que le gel est plus cassant dans le yaourt de l'invention, car plus homogène que celui obtenu avec le procédé de comparaison,
- s'agissant de l'épaisseur en bouche, le yaourt de l'invention a obtenu une note plus forte que celui obtenu par le procédé de comparaison, car il est moins épais ;
- s'agissant du goût rance, une note de zéro a été obtenue pour le yaourt de l'invention ;
- par ailleurs, les consommateurs ont constaté un goût de cuit pour le yaourt obtenu selon le procédé de comparaison.

### 5) Conclusion :

Le procédé de comparaison, correspondant au chauffage d'une composition laitière comprenant la composition laitière initiale et les esters de stérol ou de stanol fondus, présente les inconvénients suivants:
a) Cette composition laitière est chauffée en présence d'air dissous en raison de l'agitation ; elle est donc susceptible d'oxyder les acides gras insaturés des esters (estérification en présence d'huile de colza naturellement riche en C18 :2, et C18 :3), ce qui va donner des peroxydes, puis hydroperoxydes connus pour générer des goûts rances inacceptables pour un produit alimentaire. De plus, ces composés sont susceptibles d'oxyder des molécules nutritionnellement intéressantes comme des vitamines (C, E et A) ainsi que certains acides aminés (méthionine et tryptophane).
b) La longue étape de chauffage entre 70°C et 80°C de la composition laitière comprenant la composition laitière initiale et les esters de stérol ou de stanol fondus (jusqu'à 2 h) est aussi susceptible de dégrader les protéines sériques, qui ont une importance fonctionnelle considérable dans les technologies de fabrication des yoghourts (émulsification des matières grasses, rétention de sérum, viscosité).
c) La maillardisation, en présence de sucre (lactose) et d'acides aminés, des réactions de polymérisation moléculaires peut engendrer des changements de couleur (brun) ainsi que des goûts de "cuits" ; de plus cette réaction mobilise la lysine un acide aminé essentiel.

## Revendications

1. Procédé de préparation dans une ligne de fabrication d'un produit laitier comprenant une étape d'introduction par injection en continu, à travers la ligne de fabrication, d'au moins un ester de stérol et/ou de stanol à une température donnée T₁, supérieure ou égale à la température de fusion dudit ester, et notamment variant de 35 à 80°C, dans une composition laitière présentant une température donnée T₂ au moins égale à T₁, correspondant à une composition initiale à base de lait, contenant des protéines laitières et dépourvue d'émulsifiant, pour obtenir un mélange,
ladite étape d'introduction de l'ester de stérol et/ou de stanol ayant lieu avant une étape d'homogénéisation dudit mélange.

2. Procédé selon la revendication 1, comprenant une étape d'introduction en continu d'un ester de stérol et/ou de stanol à une température T₁ variant de 35 à 80°C, notamment de 40 à 70°C, et plus particulièrement de 45 à 60°C, dans la composition laitière telle que définie dans la revendication 1.

3. Procédé de préparation d'un produit laitier selon l'une des revendications 1 ou 2, **caractérisé en ce qu'**il comprend les étapes suivantes :
- une étape de préchauffage de la composition initiale telle que définie dans la revendication 1, ladite étape de préchauffage étant effectuée à une température T₂ d'environ 50°C à environ 70°C, notamment d'environ 55°C à environ 65°C, et étant de préférence effectuée à environ 65°C, afin d'obtenir une composition laitière à la température de préchauffage,
- une étape d'introduction par injection en continu de l'ester de stérol et/ou de stanol à une température T₁ telle que définie dans la revendication 1 ou 2, dans la susdite composition laitière à la température de préchauffage, afin d'obtenir un mélange, et
- une étape d'homogénéisation dudit mélange.

4. Procédé de préparation d'un produit laitier selon l'une des revendications 1 à 2, **caractérisé en ce qu'**il comprend les étapes suivantes :
- une étape de chauffage d'une composition laitière correspondant à une composition initiale à base de lait, contenant des protéines laitières et dépourvue d'émulsifiant, ladite étape de chauffage étant effectuée à une température T₂ d'environ 85°C à environ 100°C, notamment d'environ 87°C à environ 97°C, avantageusement d'environ 87°C à environ 95°C, et étant de préférence effectuée à environ 95°C, afin d'obtenir une composition laitière à la température de chauffage,
- une étape d'introduction de l'ester de stérol et/ou de stanol à une température T₁ définie dans les revendications 1 à 3, dans la susdite composition laitière à la température de chauffage, afin d'obtenir un mélange, et
- une étape d'homogénéisation dudit mélange.

5. Procédé de préparation d'un produit laitier selon l'une des revendications 1 à 2, **caractérisé en ce qu'**il comprend les étapes suivantes :
- une étape de chauffage d'une composition laitière correspondant à une composition initiale à base de lait, contenant des protéines laitières et dépourvue d'émulsifiant, ladite étape de chauffage étant effectuée à une température T₂ d'environ 85°C à environ 100°C, notamment d'environ 87°C à environ 97°C, avantageusement d'environ 87°C à environ 95°C, et étant de préférence effectuée à environ 95°C, afin d'obtenir une composition laitière à la température de chauffage,
- une étape d'introduction de l'ester de stérol et/ou de stanol à une température T₁ définie dans les revendications 1 à 3, dans la susdite composition laitière à la température de chauffage, afin d'obtenir un mélange, et
- une étape de chambrage dudit mélange, ladite étape de chambrage étant effectuée pendant une durée suffisante pour maintenir la composition laitière issue de l'étape de chauffage pendant une durée suffisante à la température de chauffage, afin de détruire la flore microbienne végétative, afin d'obtenir un mélange chambré, et
- une étape d'homogénéisation du susdit mélange chambré.

6. Procédé de préparation d'un produit laitier selon l'une des revendications 1, 2 ou 5, **caractérisé en ce qu'**il comprend les étapes suivantes :
- une étape de préchauffage d'une composition initiale à base de lait, contenant des protéines laitières et dépourvue d'émulsifiant, à une température de préchauffage d'environ 50°C à environ 70°C, notamment d'environ 55°C à environ 65°C, et étant de préférence effectuée à environ 65°C, pour obtenir une composition laitière à la température de préchauffage,
- une étape d'introduction dans la susdite composition laitière à la température de préchauffage, d'au moins un ester de stérol et/ou de stanol à la température T₁ définie dans la revendication 2, afin d'obtenir un mélange,
- une étape d'homogénéisation du susdit mélange à une pression d'environ 100 bars à environ 280 bars, notamment d'environ 100 bars à environ 250 bars, avantageusement d'environ 100 bars à environ 200 bars, et de préférence d'environ 200 bars, pour obtenir un mélange homogénéisé,
- une étape de chauffage du susdit mélange homogénéisé, ledit chauffage étant effectué à une température de chauffage d'environ 85°C à environ 100°C, notamment d'environ 87°C à environ 97°C, avantageusement d'environ 87°C à environ 95°C, et étant de préférence effectué à environ 95°C, pour obtenir un mélange homogénéisé chauffé, et
- une étape de chambrage du susdit mélange homogénéisé chauffé, pour obtenir un mélange homogénéisé chauffé et chambré.

7. Procédé selon la revendication 6, dans lequel l'étape de chambrage est suivie des étapes suivantes :
- une étape de fermentation du mélange homogénéisé chauffé et chambré tel que défini dans la revendication 5, effectuée à une température d'environ 30°C à environ 47°C, notamment d'environ 35°C à environ 45°C, et de préférence d'environ 38°C à environ 42°C, afin d'obtenir un mélange fermenté, et
- une éventuelle étape de lissage du susdit mélange fermenté, afin d'obtenir une masse blanche finale, comprenant une phase grasse, correspondant à l'ester de stérol et/ou de stanol, incluse par l'étape d'homogénéisation dans le réseau protéique formée par les protéines laitières et le lait de la susdite composition initiale telle que définie dans la revendication 1, ladite masse blanche finale étant **caractérisée en ce qu'**elle présente une homogénéité entre la phase grasse et le réseau protéique, et ne présente aucun déphasage entre la phase aqueuse et le réseau protéique.

8. Procédé selon la revendication 7, dans lequel l'étape de lissage est suivie d'une étape correspondant à l'ajout d'une préparation de fruits dépourvue de stérol et/ou de stanol sous quelque forme que ce soit.

9. Procédé selon la revendication 7, dans lequel l'étape de lissage est suivie d'une étape correspondant à l'ajout d'une composition de céréales dépourvue de stérol et/ou de stanol sous quelque forme que ce soit.

10. Procédé selon la revendication 8, **caractérisé en ce que** la préparation de fruits comprend un épaississant, notamment choisi parmi : gomme xanthane, pectine, amidon, notamment gélatinisé, gomme gélane, cellulose et ses dérivés, gomme de guar et de caroube, et inuline, la concentration de ces épaississants étant d'environ 0,4% à environ 3% par rapport à la préparation de fruits.

11. Procédé de préparation d'un produit laitier selon la revendication 1 ou 2, **caractérisé en ce qu'**il comprend les étapes suivantes :
- une étape de préchauffage d'une composition initiale à base de lait, contenant des protéines laitières et dépourvue d'émulsifiant, à une température T₂ de préchauffage d'environ 50°C à environ 70°C, notamment d'environ 55°C à environ 65°C, et étant de préférence effectuée à environ 65°C, pour obtenir une composition laitière à la température de préchauffage,
- une étape d'introduction dans la susdite composition laitière d'au moins un ester de stérol à une température T₁ définie dans la revendication 2, afin d'obtenir un mélange,
- une étape d'homogénéisation du susdit mélange à une pression d'environ 100 bars à environ 280 bars, notamment d'environ 100 bars à environ 250 bars, avantageusement d'environ 100 bars à environ 200 bars, et de préférence d'environ 200 bars, pour obtenir un mélange homogénéisé,
- une étape de chauffage du susdit mélange homogénéisé, ledit chauffage étant effectué à une température de chauffage d'environ 85°C à environ 100°C, notamment d'environ 87°C à environ 97°C, avantageusement d'environ 87°C à environ 95°C, et étant de préférence effectué à environ 95°C, pour obtenir un mélange homogénéisé chauffé, et
- une étape de chambrage du susdit mélange homogénéisé chauffé, ladite étape de chambrage étant effectuée pendant une durée d'environ 4 minutes à environ 10 minutes, notamment d'environ 5 à environ 8 minutes, et étant de préférence effectuée pendant environ 6 minutes, pour obtenir un mélange homogénéisé chauffé et chambré,
- une étape de fermentation du susdit mélange homogénéisé chauffé et chambré, effectuée à une température d'environ 30°C à environ 47°C, notamment d'environ 35°C à environ 45°C, et de préférence d'environ 38°C à environ 42°C, afin d'obtenir un mélange fermenté, et
- une éventuelle étape de lissage du susdit mélange fermenté, afin d'obtenir une masse blanche finale, comprenant une phase grasse, correspondant à l'ester de stérol et/ou de stanol, incluse par l'étape d'homogénéisation dans le réseau protéique formée par les protéines laitières et le lait de la susdite composition initiale telle que définie dans la revendication 1, ladite masse blanche finale étant **caractérisée en ce qu'**elle présente une homogénéité entre la phase grasse et le réseau protéique, et ne présente aucun déphasage entre la phase aqueuse et le réseau protéique.

12. Procédé selon la revendication 11, **caractérisé en ce que** la composition initiale est dépourvue d'épaississant.

13. Procédé de préparation d'un produit laitier selon la revendication 1 ou 2, **caractérisé en ce qu'**il comprend les étapes suivantes :
- une étape de préchauffage d'une composition initiale à base de lait, contenant des protéines laitières et dépourvue d'émulsifiant, à une température T₂ de préchauffage d'environ 50°C à environ 70°C, notamment d'environ 55°C à environ 65°C, et étant de préférence effectuée à environ 65°C, pour obtenir une composition laitière à la température de préchauffage,
- une étape d'introduction dans la susdite composition laitière d'au moins un ester de stérol et/ou de stanol à une température T₁ définie dans la revendication 2, afin d'obtenir un mélange,
- une étape d'homogénéisation du susdit mélange à une pression d'environ 100 bars à environ 280 bars, notamment d'environ 100 bars à environ 250 bars, avantageusement d'environ 100 bars à environ 200 bars, et de préférence d'environ 200 bars, pour obtenir un mélange homogénéisé,
- une étape de chauffage du susdit mélange homogénéisé, ledit chauffage étant effectué à une température de chauffage d'environ 85°C à environ 100°C, notamment d'environ 87°C à environ 97°C, avantageusement d'environ 87°C à environ 95°C, et étant de préférence effectuée à environ 95°C, pour obtenir un mélange homogénéisé chauffé, et
- une étape de chambrage du susdit mélange homogénéisé chauffé, ladite étape de chambrage étant effectuée pendant une durée d'environ 4 minutes à environ 10 minutes, notamment d'environ 5 à environ 8 minutes, et étant de préférence effectuée pendant environ 6 minutes, pour obtenir un mélange homogénéisé chauffé et chambré,
- une étape de fermentation du susdit mélange homogénéisé chauffé et chambré, effectuée à une température d'environ 30°C à environ 47°C, notamment d'environ 35°C à environ 45°C, et de préférence d'environ 38°C à environ 42°C, afin obtenir un mélange fermenté, et
- une étape de lissage du susdit mélange fermenté, afin d'obtenir une masse blanche finale, comprenant une phase grasse, correspondant à l'ester de stérol et/ou de stanol, incluse par l'étape d'homogénéisation dans le réseau protéique formée par les protéines laitières et le lait de la susdite composition initiale telle que définie dans la revendication 1, ladite masse blanche finale étant **caractérisée en ce qu'**elle présente une homogénéité entre la phase grasse et le réseau protéique, et ne présente aucun déphasage entre la phase aqueuse et le réseau protéique, et
- une étape d'ajout d'une préparation de fruits dépourvue de stérol et/ou de stanol sous quelque forme que ce soit.

14. Procédé selon la revendication 13, **caractérisé en ce que** la préparation de fruits contient un épaississant, notamment choisi parmi : alginates, gomme xanthane, pectine, amidon, notamment gélatinisé, gomme gélane, cellulose et ses dérivés, gomme de guar et de caroube, et inuline, la concentration de ces épaississants étant d'environ 0,4% à environ 3% par rapport à la préparation de fruits.

15. Procédé selon l'une quelconque des revendications précédentes 1 à 14, **caractérisée en ce que** la composition initiale comprend du lait, de la poudre de lait, des protéines laitières et un agent en concentration telle qu'il limite la synérèse, ledit agent étant notamment choisi parmi : les alginates, les maltodextrines, les pectines, les fibres solubles, l'amidon et l'inuline, et étant de préférence l'amidon.

16. Procédé selon l'une quelconque des revendications 1 à 15, **caractérisé en ce que** l'ester de stérol et/ou de stanol est choisi dans le groupe comprenant : 22-dihydroerogostérol, 7,24(28)-erogostadiénol, campestérol, néospongostérol, 7-ergosténol, cerebistérol, corbistérol, stigmastérol, focostérol, α-spinastérol, sargastérol, 7-dehydrocryonastérol, poriferastérol, chondrillastérol, β-sitostérol, cryonastérol (γ-sitostérol), 7-stigmasternol, 22-stigmasténol, dihydro-γ-sitostérol, β-sitostanol, 14-dehydroergostérol, 24(28)-dehydroergostérol, ergostérol, brassicastérol, ascostérol, épistérol, fécostérol et 5-dihydroergostérol, et leurs mélanges et est avantageusement le β-sitostérol, le β-sitostanol, le β-sitostanol ester, le campestérol ou le brassicastérol.

17. Procédé selon l'une quelconque des revendications 1 à 16, **caractérisé en ce que** le rapport entre le débit de l'ester de stérol et/ou de stanol et entre le débit de la composition initiale à base de lait varie d'environ 0,5 à environ 3.

18. Produit susceptible d'être obtenu selon le procédé selon la revendication 11 ou 12, se présentant sous la forme d'un produit laitier de type yaourt nature ferme.

19. Produit susceptible d'être obtenu selon le procédé selon la revendication 13 ou 14, se présentant sous la forme d'un produit laitier de type yaourt brassé nature ou aux fruits ou de type yaourt à boire.

20. Produit selon l'une des revendications 18 ou 19, contenant d'environ 0,1% à environ 3% d'ester de stérol et/ou de stanol, et notamment d'environ 0,5% à environ 2,5% d'ester de stérol et/ou de stanol, avantageusement d'environ 1% à environ 1,6% d'ester de stérol et/ou de stanol.

## Claims

1. Method for the preparation in a production line of a dairy product comprising a stage of introduction by continuous injection, via the production line, of at least one sterol and/or stanol ester at a given temperature T₁, higher than or equal to the melting temperature of said ester, and in particular ranging from 35 to 80°C, into a dairy composition having a given temperature T₂ at least equal to T₁, corresponding to an initial milk-based composition, containing milk proteins and without emulsifier, in order to obtain a mixture,
said stage of introduction of the sterol and/or stanol ester taking place before a stage of homogenization of said mixture.

2. Method according to claim 1, comprising a stage of continuous introduction of a sterol and/or stanol ester at a temperature T₁ ranging from 35 to 80°C, in particular from 40 to 70°C, and more particularly from 45 to 60°C, into the dairy composition as defined in claim 1.

3. Method for the preparation of a dairy product according to one of claims 1 or 2, **characterized in that** it comprises the following stages:
- a stage of preheating the initial composition as defined in claim 1, said preheating stage being carried out at a temperature T₂ of approximately 50°C to approximately 70°C, in particular approximately 55°C to approximately 65°C, and preferably being carried out at approximately 65°C, in order to obtain a dairy composition at the preheating temperature,
- a stage of continuous introduction by injection of the sterol and/or stanol ester at a temperature T₁ as defined in claim 1 or 2, into the abovementioned dairy composition at the preheating temperature, in order to obtain a mixture, and
- a stage of homogenization of said mixture.

4. Method for the preparation of a dairy product according to one of claims 1 to 2, **characterized in that** it comprises the following stages:
- a stage of heating a dairy composition corresponding to an initial milk-based composition, containing milk proteins and without emulsifier, said heating stage being carried out at a temperature T₂ of approximately 85°C to approximately 100°C, in particular approximately 87°C to approximately 97°C, advantageously approximately 87°C to approximately 95°C, and preferably being carried out at approximately 95°C, in order to obtain a dairy composition at the heating temperature,
- a stage of introduction of the sterol and/or stanol ester at a temperature T₁ defined in claims 1 to 3, into the abovementioned dairy composition at the heating temperature, in order to obtain a mixture, and
- a stage of homogenization of said mixture.

5. Method for the preparation of a dairy product according to one of claims 1 to 2, **characterized in that** it comprises the following stages:
- a stage of heating a dairy composition corresponding to an initial milk-based composition, containing milk proteins and without emulsifier, said heating stage being carried out at a temperature T₂ of approximately 85°C to approximately 100°C, in particular approximately 87°C to approximately 97°C, advantageously approximately 87°C to approximately 95°C, and preferably being carried out at approximately 95°C, in order to obtain a dairy composition at the heating temperature,
- a stage of introduction of the sterol and/or stanol ester at a temperature T₁ defined in claims 1 to 3, into the abovementioned dairy composition at the heating temperature, in order to obtain a mixture, and
- a stage of holding said mixture, said holding stage being carried out for a period sufficient to maintain the dairy composition originating from the heating stage for a period at the heating temperature, sufficient to destroy the vegetative microbial flora, in order to obtain a held mixture, and
- a stage of homogenization of the abovementioned held mixture.

6. Method for the preparation of a dairy product according to one of claims 1, 2 or 5, **characterized in that** it comprises the following stages:
- a stage of preheating an initial milk-based composition, containing milk proteins and without emulsifier, at a preheating temperature of approximately 50°C to approximately 70°C, in particular approximately 55°C to approximately 65°C, and preferably being carried out at approximately 65°C, in order to obtain a dairy composition at the preheating temperature,
- a stage of introduction into the abovementioned dairy composition at the preheating temperature, of at least one sterol and/or stanol ester at the temperature T₁ defined in claim 2, in order to obtain a mixture,
- a stage of homogenization of the abovementioned mixture at a pressure of approximately 100 bars to approximately 280 bars, in particular approximately 100 bars to approximately 250 bars, advantageously approximately 100 bars to approximately 200 bars, and preferably approximately 200 bars, in order to obtain a homogenized mixture,
- a stage of heating the abovementioned homogenized mixture, said heating being carried out at a heating temperature of approximately 85°C to approximately 100°C, in particular approximately 87°C to approximately 97°C, advantageously approximately 87°C to approximately 95°C, and preferably being carried out at approximately 95°C, in order to obtain a heated homogenized mixture, and
- a stage of holding the abovementioned heated homogenized mixture, in order to obtain a heated and homogenized held mixture.

7. Method according to claim 6, in which the holding stage is followed by the following stages:
- a stage of fermentation of the heated and homogenized held mixture as defined in claim 5, carried out at a temperature of approximately 30°C to approximately 47°C, in particular approximately 35°C to approximately 45°C, and preferably approximately 38°C to approximately 42°C, in order to obtain a fermented mixture, and
- an optional stage of smoothing the abovementioned fermented mixture, in order to obtain a final white mass, comprising a fatty phase, corresponding to the sterol and/or stanol ester, included by the homogenization stage in the protein network formed by the milk proteins and the milk of the abovementioned initial composition as defined in claim 1, said final white mass being **characterized in that** it exhibits homogeneity between the fatty phase and the protein network, and exhibits no phase difference between the aqueous phase and the protein network.

8. Method according to claim 7, in which the smoothing stage is followed by a stage corresponding to the addition of a fruit preparation without sterol and/or stanol in any form whatever.

9. Method according to claim 7, in which the smoothing stage is followed by a stage corresponding to the addition of a cereal composition without sterol and/or stanol in any form whatever.

10. Method according to claim 8, **characterized in that** the fruit preparation comprises a thickener, in particular chosen from: xanthan gum, pectin, starch, in particular gelatinized, gelan gum, cellulose and its derivatives, guar and carob gum, and inulin, the concentration of these thickeners being approximately 0.4% to approximately 3% relative to the fruit preparation.

11. Method for the preparation of a dairy product according to claim 1 or 2, **characterized in that** it comprises the following stages:
- a stage of preheating an initial milk-based composition, containing milk proteins and without emulsifier, at a preheating temperature T₂ of approximately 50°C to approximately 70°C, in particular approximately 55°C to approximately 65°C, and preferably being carried out at approximately 65°C, in order to obtain a dairy composition at the preheating temperature,
- a stage of introduction into the abovementioned dairy composition of at least one sterol ester at a temperature T₁ defined in claim 2, in order to obtain a mixture,
- a stage of homogenization of the abovementioned mixture at a pressure of approximately 100 bars to approximately 280 bars, in particular approximately 100 bars to approximately 250 bars, advantageously approximately 100 bars to approximately 200 bars, and preferably approximately 200 bars, in order to obtain a homogenized mixture,
- a stage of heating the abovementioned homogenized mixture, said heating being carried out at a heating temperature of approximately 85°C to approximately 100°C, in particular approximately 87°C to approximately 97°C, advantageously approximately 87°C to approximately 95°C, and preferably being carried out at approximately 95°C, in order to obtain a heated homogenized mixture, and
- a stage of holding the abovementioned heated homogenized mixture, said holding stage being carried out for a duration of approximately 4 minutes to approximately 10 minutes, in particular approximately 5 to approximately 8 minutes, and preferably being carried out for approximately 6 minutes, in order to obtain a heated and homogenized held mixture,
- a stage of fermentation of the abovementioned heated and homogenized held mixture, carried out at a temperature of approximately 30°C to approximately 47°C, in particular approximately 35°C to approximately 45°C, and preferably approximately 38°C to approximately 42°C, in order to obtain a fermented mixture, and
- an optional stage of smoothing the abovementioned fermented mixture, in order to obtain a final white mass, comprising a fatty phase, corresponding to the sterol and/or stanol ester, included by the homogenization stage in the protein network formed by the milk proteins and the milk of the abovementioned initial composition as defined in claim 1, said final white mass being **characterized in that** it exhibits a homogeneity between the fatty phase and the protein network, and exhibits no phase difference between the aqueous phase and the protein network.

12. Method according to claim 11, **characterized in that** the initial composition is without thickener.

13. Method for the preparation of a dairy product according to claim 1 or 2, **characterized in that** it comprises the following stages:
- a stage of preheating an initial milk-based composition, containing milk proteins and without emulsifier, at a temperature T₂ of preheating of approximately 50°C to approximately 70°C, in particular approximately 55°C to approximately 65°C, and preferably being carried out at approximately 65°C, in order to obtain a dairy composition at the preheating temperature,
- a stage of introduction into the abovementioned dairy composition of at least one sterol and/or stanol ester at a temperature T₁ defined in claim 2, in order to obtain a mixture,
- a stage of homogenization of the abovementioned mixture at a pressure of approximately 100 bars to approximately 280 bars, in particular approximately 100 bars to approximately 250 bars, advantageously approximately 100 bars to approximately 200 bars, and preferably approximately 200 bars, in order to obtain a homogenized mixture,
- a stage of heating the abovementioned homogenized mixture, said heating being carried out at a heating temperature of approximately 85°C to approximately 100°C, in particular approximately 87°C to approximately 97°C, advantageously approximately 87°C to approximately 95°C, and preferably being carried out at approximately 95°C, in order to obtain a heated homogenized mixture, and
- a stage of holding the abovementioned heated homogenized mixture, said holding stage being carried out for a duration of approximately 4 minutes to approximately 10 minutes, in particular approximately 5 to approximately 8 minutes, and preferably being carried out for approximately 6 minutes, in order to obtain a heated and homogenized held mixture,
- a stage of fermentation of the abovementioned heated and homogenized held mixture, carried out at a temperature of approximately 30°C to approximately 47°C, in particular approximately 35°C to approximately 45°C, and preferably approximately 38°C to approximately 42°C, in order to obtain a fermented mixture, and
- a stage of smoothing the abovementioned fermented mixture, in order to obtain a final white mass, comprising a fatty phase, corresponding to the sterol and/or stanol ester, included by the homogenization stage in the protein network formed by the milk proteins and the milk of the abovementioned initial composition as defined in claim 1, said final white mass being **characterized in that** it exhibits a homogeneity between the fatty phase and the protein network, and exhibits no phase difference between the aqueous phase and the protein network, and
- a stage of addition of a fruit preparation without sterol and/or stanol in any form whatever.

14. Method according to claim 13, **characterized in that** the fruit preparation contains a thickener, in particular chosen from: alginates, xanthan gum, pectin, starch, in particular gelatinized, gelan gum, cellulose and its derivatives, guar and carob gum, and inulin, the concentration of these thickeners being approximately 0.4% to approximately 3% relative to the fruit preparation.

15. Method according to any one of the preceding claims 1 to 14, **characterized in that** the initial composition comprises milk, milk powder, milk proteins and an agent in a concentration such that it limits syneresis, said agent being in particular chosen from: the alginates, maltodextrins, pectins, soluble fibres, starch and inulin, and preferably being starch.

16. Method according to any one of claims 1 to 15, **characterized in that** the sterol and/or stanol ester is chosen from the group comprising: 22-dihydroerogosterol, 7.24(28)-erogostadienol, campesterol, neospongosterol, 7-ergostenol, cerebisterol, corbisterol, stigmasterol, focosterol, α-spinasterol, sargasterol, 7-dehydrocryonasterol, poriferasterol, chondrillasterol, β-sitosterol, cryonasterol (γ-sitosterol), 7-stigmastemol, 22-stigmastenol, dihydro-γ-sitosterol, β-sitostanol, 14-dehydroergosterol, 24(28)-dehydroergosterol, ergosterol, brassicasterol, ascosterol, episterol, fecosterol and 5-dihydroergosterol, and their mixtures and is advantageously β-sitosterol, β-sitostanol, β-sitostanol ester, campesterol or brassicasterol.

17. Method according to any one of claims 1 to 16, **characterized in that** the ratio of the sterol and/or stanol ester flow rate to the initial milk-based composition flow rate ranges from approximately 0.5 to approximately 3.

18. Product liable to be obtained according to the method according to claim 11 or 12, being presented in the form of a dairy product of firm natural yogurt type.

19. Product liable to be obtained according to the method according to claim 13 or 14, being presented in the form of a dairy product of stirred natural or fruit yogurt type or drinking yogurt type.

20. Product according to one of claims 18 to 19, containing approximately 0.1 % to approximately 3% sterol and/or stanol ester, and in particular approximately 0.5% to approximately 2.5% sterol and/or stanol ester, advantageously approximately 1% to approximately 1.6% sterol and/or stanol ester.

## Patentansprüche

1. Verfahren zur Herstellung eines Milchprodukts in einer Fertigungslinie, das einen Schritt des Einführens über die Fertigungslinie, durch kontinuierliches Einspritzen, von mindestens einem Sterol- und/oder Stanolester bei einer gegebenen Temperatur T₁, die höher oder gleich der Schmelztemperatur des Esters ist, und die insbesondere von 35 bis 80 °C variiert, in eine Milchzusammensetzung, die eine gegebene Temperatur T₂ aufweist, die mindestens gleich T₁ ist, und einer Ausgangszusammensetzung auf Milchbasis entspricht, die Milchproteine enthält und frei von Emulgator ist, um eine Mischung zu erhalten,
wobei der Schritt des Einführens des Sterol- und/oder Stanolesters vor einem Schritt der Homogenisierung der Mischung stattfindet.

2. Verfahren nach Anspruch 1, das einen Schritt des kontinuierlichen Einführens eines Sterol- und/oder Stanolesters bei einer Temperatur T₁ umfasst, die von 35 bis 80 °C, insbesondere von 40 bis 70 °C, und spezieller von 45 bis 60 °C variiert, in die Milchzusammensetzung, wie in Anspruch 1 definiert.

3. Verfahren zur Herstellung eines Milchprodukts nach einem der Ansprüche 1 oder 2, **dadurch gekennzeichnet, dass** es die folgenden Schritte umfasst:
- einen Schritt des Vorerwärmens der Ausgangszusammensetzung, wie in Anspruch 1 definiert, wobei der Schritt des Vorerwärmens bei einer Temperatur T₂ von etwa 50 °C bis etwa 70 °C, insbesondere von etwa 55 °C bis etwa 65 °C durchgeführt wird, und bevorzugt bei etwas 65 °C durchgeführt wird, um eine Milchzusammensetzung mit der Vorerwärmungstemperatur zu erhalten,
- einen Schritt des Einführens durch kontinuierliches Einspritzen des Sterol- und/oder Stanolesters bei einer Temperatur T₁, wie in Anspruch 1 oder 2 definiert, in die oben genannte Milchzusammensetzung mit der Vorerwärmungstemperatur, um eine Mischung zu erhalten, und
- einen Schritt der Homogenisierung der Mischung.

4. Verfahren zur Herstellung eines Milchprodukts nach einem der Ansprüche 1 bis 2, **dadurch gekennzeichnet, dass** es die folgenden Schritte umfasst:
- einen Schritt des Erwärmens einer Milchzusammensetzung, die einer Ausgangszusammensetzung auf Milchbasis entspricht, die Milchproteine enthält und frei von Emulgator ist, wobei der Schritt des Erwärmens bei einer Temperatur T₂ von etwa 85 °C bis etwa 100 °C, insbesondere von etwa 87 °C bis etwa 97 °C, vorteilhafterweise von etwa 87 °C bis etwa 95 °C durchgeführt wird, und bevorzugt bei etwa 95 °C durchgeführt wird, um eine Milchzusammensetzung mit der Erwärmungstemperatur zu erhalten,
- einen Schritt des Einführens des Sterol- und/oder Stanolesters bei einer Temperatur T₁, wie in den Ansprüchen 1 bis 3 definiert, in die oben genannte Milchzusammensetzung mit der Erwärmungstemperatur, um eine Mischung zu erhalten, und
- einen Schritt der Homogenisierung der Mischung.

5. Verfahren zur Herstellung eines Milchprodukts nach einem der Ansprüche 1 bis 2, **dadurch gekennzeichnet, dass** es die folgenden Schritte umfasst:
- einen Schritt des Erwärmens einer Milchzusammensetzung, die einer Ausgangszusammensetzung auf Milchbasis entspricht, die Milchproteine enthält und frei von Emulgator ist, wobei der Schritt des Erwärmens bei einer Temperatur T₂ von etwa 85 °C bis etwa 100 °C, insbesondere von etwa 87 °C bis etwa 97 °C, vorteilhafterweise von etwa 87 °C bis etwa 95 °C durchgeführt wird, und bevorzugt bei etwa 95 °C durchgeführt wird, um eine Milchzusammensetzung mit der Erwärmungstemperatur zu erhalten,
- einen Schritt des Einführens des Sterol- und/oder Stanolesters bei einer Temperatur T₁, wie in den Ansprüchen 1 bis 3 definiert, in die oben genannte Milchzusammensetzung mit der Erwärmungstemperatur, um eine Mischung zu erhalten, und
- einen Schritt des Warmhaltens der Mischung, wobei dieser Schritt des Warmhaltens während eines ausreichenden Zeitraums durchgeführt wird, um die Milchzusammensetzung, die aus dem Schritt des Erwärmens stammt, für einen ausreichend langen Zeitraum auf der Erwärmungstemperatur zu halten, um die vegetative mikrobielle Flora zu zerstören, um eine warmgehaltene Mischung zu erhalten, und
- einen Schritt der Homogenisierung der oben genannten warmgehaltenen Mischung.

6. Verfahren zur Herstellung eines Milchprodukts nach einem der Ansprüche 1, 2 oder 5, **dadurch gekennzeichnet, dass** es die folgenden Schritte umfasst:
- einen Schritt des Vorerwärmens einer Ausgangszusammensetzung auf Milchbasis, die Milchproteine enthält und frei von Emulgator ist, auf eine Vorerwärmungstemperatur von etwa 50 °C bis etwa 70 °C, insbesondere von etwa 55 °C bis etwa 65 °C, und der bevorzugt bei etwa 65 °C durchgeführt wird, um eine Milchzusammensetzung mit der Vorerwärmungstemperatur zu erhalten,
- einen Schritt des Einführens in die oben genannte Milchzusammensetzung mit der Vorerwärmungstemperatur von mindestens einem Sterol- und/oder Stanolester mit der Temperatur T₁, die in Anspruch 2 definiert ist, um eine Mischung zu erhalten,
- einen Schritt der Homogenisierung der oben genannten Mischung bei einem Druck von etwa 100 Bar bis etwa 280 Bar, insbesondere von etwa 100 Bar bis etwa 250 Bar, vorteilhafterweise von etwa 100 Bar bis etwa 200 Bar, und bevorzugt bei etwa 200 Bar, um eine homogenisierte Mischung zu erhalten,
- einen Schritt des Erwärmens der oben genannten homogenisierten Mischung, wobei das Erwärmen bei einer Erwärmungstemperatur von etwa 85 °C bis etwa 100 °C, insbesondere von etwa 87 °C bis etwa 97 °C, vorteilhafterweise von etwa 87 °C bis etwa 95 °C durchgeführt wird, und bevorzugt bei etwa 95 °C durchgeführt wird, um eine erwärmte homogenisierte Mischung zu erhalten, und
- einen Schritt des Warmhaltens der oben genannten erwärmten homogenisierten Mischung, um eine erwärmte homogenisierte und warmgehaltene Mischung zu erhalten.

7. Verfahren nach Anspruch 6, bei dem Schritt des Warmhaltens die folgenden Schritte folgen:
- ein Schritt des Fermentierens der erwärmten und warmgehaltenen homogenisierten Mischung, wie in Anspruch 5 definiert, der bei einer Temperatur von etwa 30 °C bis etwa 47 °C, insbesondere von etwa 35 °C bis etwa 45 °C, und bevorzugt bei etwa 38 °C bis etwa 42 °C durchgeführt wird, um eine fermentierte Mischung zu erhalten, und
- gegebenenfalls ein Schritt des Glättens der oben genannten fermentierten Mischung, um eine fertige weiße Masse zu erhalten, die eine Fettphase umfasst, die dem Sterol- oder Stanolester entspricht, die durch den Schritt der Homogenisierung in das Proteinnetzwerk, das durch die Milchproteine und die Milch der oben genannten Ausgangszusammensetzung gebildet wird, eingefügt wird, wie in Anspruch 1 definiert, wobei die fertige weiße Masse **dadurch gekennzeichnet ist, dass** sie eine Homogenität zwischen der Fettphase und dem Proteinnetzwerk aufweist, und keinerlei Phasendifferenz zwischen der wässrigen Phase und dem Proteinnetzwerk aufweist.

8. Verfahren nach Anspruch 7, bei dem auf den Schritt des Glättens ein Schritt folgt, der dem Zugeben einer Fruchtzubereitung entspricht, die frei von Sterol und/oder Stanol in jedweder Form ist.

9. Verfahren nach Anspruch 7, bei dem auf den Schritt des Glättens ein Schritt folgt, der dem Zugeben einer Getreidezubereitung entspricht, die frei von Sterol und/oder Stanol in jedweder Form ist.

10. Verfahren nach Anspruch 8, **dadurch gekennzeichnet, dass** die Fruchtzubereitung ein Verdickungsmittel umfasst, insbesondere ausgewählt aus: Xanthangummi, Pektin, Stärke, insbesondere verkleistert, Gellangummi, Cellulose und deren Derivate, Guar- und Carobgummi und Inulin, wobei die Konzentration dieser Verdickungsmittel bei etwa 0,4 % bis etwa 3 %, bezogen auf die Fruchtzubereitung, liegt.

11. Verfahren zur Herstellung eines Milchprodukts nach Anspruch 1 oder 2, **dadurch gekennzeichnet, dass** es die folgenden Schritte umfasst:
- einen Schritt des Vorwärmens einer Ausgangszusammensetzung auf Milchbasis, die Milchproteine enthält und frei von Emulgator ist, auf eine Vorerwärmungstemperatur T₂ von etwa 50 °C bis etwa 70 °C, insbesondere von etwa 55 °C bis etwa 65 °C, und der bevorzugt bei etwa 65 °C durchgeführt wird, um eine Milchzusammensetzung mit der Vorerwärmungstemperatur zu erhalten,
- einen Schritt des Einführens in die oben genannte Milchzusammensetzung von mindestens einem Sterolester mit einer Temperatur T₁, die in Anspruch 2 definiert ist, um eine Mischung zu erhalten,
- einen Schritt der Homogenisierung der oben genannten Mischung bei einem Druck von etwa 100 Bar bis etwa 280 Bar, insbesondere von etwa 100 Bar bis etwa 250 Bar, vorteilhafterweise von etwa 100 Bar bis etwa 200 Bar, und bevorzugt bei etwa 200 Bar, um eine homogenisierte Mischung zu erhalten,
- einen Schritt des Erwärmens der oben genannten homogenisierten Mischung, wobei das Erwärmen bei einer Erwärmungstemperatur von etwa 85 °C bis etwa 100 °C, insbesondere von etwa 87 °C bis etwa 97 °C, vorteilhafterweise von etwa 87 °C bis etwa 95 °C durchgeführt wird, und bevorzugt bei etwa 95 °C durchgeführt wird, um eine erwärmte homogenisierte Mischung zu erhalten, und
- einen Schritt des Warmhaltens der oben genannten erwärmten homogenisierten Mischung, wobei der Schritt des Warmhaltens während eines Zeitraums von etwa 4 Minuten bis etwa 10 Minuten, insbesondere von etwa 5 bis etwa 8 Minuten durchgeführt wird, und der bevorzugt während etwa 6 Minuten durchgeführt wird, um eine homogenisierte erwärmte und warmgehaltene Mischung zu erhalten,
- ein Schritt des Fermentierens der oben genannten erwärmten und warmgehaltenen homogenisierten Mischung, der bei einer Temperatur von etwa 30 °C bis etwa 47 °C, insbesondere von etwa 35 °C bis etwa 45 °C, und bevorzugt bei etwa 38 °C bis etwa 42 °C durchgeführt wird, um eine fermentierte Mischung zu erhalten, und
- gegebenenfalls ein Schritt des Glättens der oben genannten fermentierten Mischung, um eine fertige weiße Masse zu erhalten, die eine Fettphase umfasst, die dem Sterol- oder Stanolester entspricht, die durch den Schritt der Homogenisierung in das Proteinnetzwerk, das durch die Milchproteine und die Milch der oben genannten Ausgangszusammensetzung gebildet wird, eingefügt wird, wie in Anspruch 1 definiert,
wobei die fertige weiße Masse **dadurch gekennzeichnet ist, dass** sie eine Homogenität zwischen der Fettphase und dem Proteinnetzwerk aufweist, und keinerlei Phasendifferenz zwischen der wässrigen Phase und dem Proteinnetzwerk aufweist.

12. Verfahren nach Anspruch 11, **dadurch gekennzeichnet, dass** die Ausgangszusammensetzung frei von Verdickungsmittel ist.

13. Verfahren zur Herstellung eines Milchprodukts nach Anspruch 1 oder 2, **dadurch gekennzeichnet, dass** es die folgenden Schritte umfasst:
- einen Schritt des Vorwärmens einer Ausgangszusammensetzung auf Milchbasis, die Milchproteine enthält und frei von Emulgator ist, auf eine Vorerwärmungstemperatur T₂ von etwa 50 °C bis etwa 70 °C, insbesondere von etwa 55 °C bis etwa 65 °C, und der bevorzugt bei etwa 65 °C durchgeführt wird, um eine Milchzusammensetzung mit der Vorerwärmungstemperatur zu erhalten,
- einen Schritt des Einführens in die oben genannte Milchzusammensetzung von mindestens einem Sterol- und/oder Stanolester mit der Temperatur T₁, die in Anspruch 2 definiert ist, um eine Mischung zu erhalten,
- einen Schritt der Homogenisierung der oben genannten Mischung bei einem Druck von etwa 100 Bar bis etwa 280 Bar, insbesondere von etwa 100 Bar bis etwa 250 Bar, vorteilhafterweise von etwa 100 Bar bis etwa 200 Bar, und bevorzugt bei etwa 200 Bar, um eine homogenisierte Mischung zu erhalten,
- einen Schritt des Erwärmens der oben genannten homogenisierten Mischung, wobei das Erwärmen bei einer Erwärmungstemperatur von etwa 85 °C bis etwa 100 °C, insbesondere von etwa 87 °C bis etwa 97 °C, vorteilhafterweise von etwa 87 °C bis etwa 95 °C durchgeführt wird, und bevorzugt bei etwa 95 °C durchgeführt wird, um eine erwärmte homogenisierte Mischung zu erhalten, und
- einen Schritt des Warmhaltens der oben genannten erwärmten homogenisierten Mischung, wobei der Schritt des Warmhaltens während eines Zeitraums von etwa 4 Minuten bis etwa 10 Minuten, insbesondere von etwa 5 bis etwa 8 Minuten durchgeführt wird, und der bevorzugt während etwa 6 Minuten durchgeführt wird, um eine homogenisierte erwärmte und warmgehaltene Mischung zu erhalten,
- ein Schritt des Fermentierens der oben genannten erwärmten und warmgehaltenen homogenisierten Mischung, der bei einer Temperatur von etwa 30 °C bis etwa 47 °C, insbesondere von etwa 35 °C bis etwa 45 °C, und bevorzugt bei etwa 38 °C bis etwa 42 °C durchgeführt wird, um eine fermentierte Mischung zu erhalten, und
- ein Schritt des Glättens der oben genannten fermentierten Mischung, um eine fertige weiße Masse zu erhalten, die eine Fettphase umfasst, die dem Sterol- oder Stanolester entspricht, die durch den Schritt der Homogenisierung in das Proteinnetzwerk, das durch die Milchproteine und die Milch der oben genannten Ausgangszusammensetzung gebildet wird, eingefügt wird, wie in Anspruch 1 definiert, wobei die fertige weiße Masse **dadurch gekennzeichnet ist, dass** sie eine Homogenität zwischen der Fettphase und dem Proteinnetzwerk aufweist, und keinerlei Phasendifferenz zwischen der wässrigen Phase und dem Proteinnetzwerk aufweist, und
- einen Schritt des Zugebens einer Fruchtzubereitung, die frei von Sterol- und/oder Stanolester in jedweder Form ist.

14. Verfahren nach Anspruch 13, **dadurch gekennzeichnet, dass** die Fruchtzubereitung ein Verdickungsmittel enthält, insbesondere ausgewählt aus: Alginaten, Xanthangummi, Pektin, Stärke, insbesondere verkleistert, Gellangummi, Cellulose und deren Derivaten, Guar- und Carobgummi und Inulin, wobei die Konzentration dieser Verdickungsmittel bei etwa 0,4 % bis etwa 3 %, bezogen auf die Fruchtzubereitung, liegt.

15. Verfahren nach irgend einem der vorhergehenden Ansprüche 1 bis 14, **dadurch gekennzeichnet, dass** die Ausgangszusammensetzung Milch, Milchpulver, Milchproteine und ein Konzentrationsmittel umfasst, das die Synärese begrenzt, wobei das Mittel insbesondere ausgewählt ist aus: Alginaten, Maltodextrinen, Pektinen, löslichen Fasern, Stärke und Inulin, und dabei bevorzugt Stärke ist.

16. Verfahren nach irgend einem der Ansprüche 1 bis 15, **dadurch gekennzeichnet, dass** der Sterol- und/oder Stanolester ausgewählt ist aus der Gruppe, umfassend: 22-Dihydroerogosterol, 7,24(28)-Erogostadienol, Campesterol, Neospongosterol, 7-Ergostenol, Cerebisterol, Corbisterol, Stigmasterol, Focosterol, α-Spinasterol, Sargasterol, 7-Dehydrocryonasterol, Poriferasterol, Chondrillasterol, β-Sitosterol, Cryonasterol (γ-Sitosterol), 7-Stigmasternol, 22-Stigmastenol, Dihydro-γ-sitosterol, β-Sitostanol, 14-Dehydroergosterol, 24(28)-Dehydroergosterol, Ergosterol, Brassicasterol, Ascosterol, Episterol, Fecosterol und 5-Dihydroergosterol, und deren Mischungen und ist vorteilhafterweise β-Sitosterol, β-Sitostanol, β-Sitostanolester, Campesterol oder Brassicasterol.

17. Verfahren nach irgendeinem der Ansprüche 1 bis 16, **dadurch gekennzeichnet, dass** das Verhältnis zwischen der Durchflussmenge von Sterol- und/oder Stanolester und zwischen der Durchflussmenge der Ausgangszusammensetzung auf Milchbasis von etwa 0,5 bis etwa 3 variiert.

18. Produkt, das geeignet ist, nach dem Verfahren nach Anspruch 11 oder 12 erhalten zu werden, das sich in Form eines Milchprodukts vom Typ fester Naturjogurt präsentiert.

19. Produkt, das geeignet ist, nach dem Verfahren nach Anspruch 13 oder 14 erhalten zu werden, das sich in Form eines Milchprodukts vom Typ gerührter Natur- oder Fruchtjogurt oder vom Typ Trinkjogurt präsentiert.

20. Produkt nach einem der Ansprüche 18 oder 19, das etwa 0,1 % bis etwa 3 % Sterol- und/oder Stanolester, und insbesondere von etwa 0,5% bis etwa 2,5% Sterol- und/oder Stanolester, vorteilhafterweise von etwa 1 % bis etwa 1,6 % Sterol- und/oder Stanolester enthält.
